# EUROPEAN PATENT SPECIFICATION

(11) **EP 1 853 675 B1**
(45) Date of publication and mention of the grant of the patent: **27.07.2011**
(21) Application number: 06722982.3
(22) Date of filing: 25.01.2006
(51) Int. Cl.: C09D 183/08, C08L 83/08, C09D 4/00, C09D 5/08

(54) **A BINDER COMPOSITION**
BINDEMITTEL
COMPOSITION LIANTE

(30) Priority: 25.01.2005 EP 05250368
(43) Date of publication of application: 14.11.2007
(60) Divisional application: 10181971.2
(73) Proprietor: SIGMA COATINGS B.V., 1422 AD Uithoorn (NL)
(72) Inventor: PLEHIERS, Mark, B-1000 Bruxelles (BE); VAN LOON, Sander, NL-1091 ZE Amsterdam (NL)
(74) Representative: Smithson, Robert Alan
(86) International application number: PCT/EP2006/000636
(87) International publication number: WO 2006/079516

(56) References cited:
- EP-A- 1 721 926
- EP-A1- 1 191 075
- EP-A2- 0 716 127
- WO-A-00/46311
- US-A- 3 671 562
- US-A- 3 720 699

## Description

The present invention relates to a binder composition, particularly to an aqueous binder composition for use in paints or impregnation agents.

Paints may be broadly considered as comprising three ingredients: a binder, a solvent and a pigment. The binder, in general terms, is a film forming component which, together with the solvent, forms the vehicle for delivery of the pigment to a chosen substrate. It is universally accepted in the art that the choice of binder in a paint can determine many of the properties of the paint.

Decorative paints may be solvent based or waterbased; in this latter case, waterbased silane emulsions are used to protect outdoor surfaces such as concrete or facades from rain water and atmospheric damage. Paints that are used for these purposes include long lasting water repellent paints, dirt repellent paints, antigrafiti paints and the like.

Anti-corrosion paints are used in a wide variety of applications to protect the substrates from corrosion. One such paint is a so called shop primer. A shop primer or pre-construction primer is usually administered as a thin layer of protective coating to a substrate. For example, hot rolled steel for the heavy steel construction industry (such as the ship building industry) is generally blasted on-line using automated procedures and immediately coated with a thin layer of shop primer.

An effective shop primer should possess the following qualities:
- Have an adequate shelf life and pot life;
- Be easily sprayable, particularly in thin layers;
- Dry reasonably rapidly;
- Offer good corrosion protection to the substrate;
- Offer good mechanical resistance;
- Not interfere with the welding and cutting operations which the substrate may be subject to;
- Withstand the heat and stress of the welding and cutting operations that the substrate may be subject to;
- Not introduce health hazards during welding operations such as the release of noxious fumes etc.;
- Offer compatability to further coatings which may be applied on top thereof, referred to as "overcoatability".

One type of binder known in the art is a silicate type binder. For example, EP-A-346385 discloses a paint composition comprising a silicate based binder, but requires the use of volatile solvents. Generally, from an environmental perspective, the use of volatile solvents in paint compositions should be avoided.

US 6,468,336, WO 02/22745 and WO 03/022940 disclose primer coatings for steel, based on water based soluble alkali silicates.

EP-A-1191075 discloses a water soluble shop primer composition having a binder comprising the reaction products of at least one omega-aminoalkyl trialkoxysilane, at least one strong acid and at least one compound having a trialkoxy or alkyldialkoxy silane and an epoxy group as terminal groups. This binder is used in a first component of a two component system, the second component comprising finely divided zinc.

US 3,720,699 discloses a protective cross linked polysiloxane coating.

Although the use of these known binders allows the composition to be water based and thus avoid the use of volatile solvents, it has been found that such primers have poor long term performance and are susceptible to blistering after the shop primer is overcoated with a paint system suitable for immersion service and immersed in water. This is a significant problem for the ship building industry.

It is one of the objects of embodiments of the present invention to address the above mentioned problems and provide a binder composition which contains few or no volatile solvents and reduces the occurrence of blistering when overcoated and immersed in water.

According to a first aspect of the present invention there is provided an aqueous binder composition as claimed in the accompanying claims. According to further aspects of the present invention there is provided a method of preparing an oligomeric or polymeric compound, a paint composition, a two-component paint composition, a siloxane polymer composition and a binder composition comprising a siloxane polymer as claimed in the accompanying claims.

Further preferred features of the aspects of the present invention are disclosed hereunder.

Preferably, the binder composition is an anti-corrosion paint binder composition, more particularly an anti-corrosion primer paint binder composition. Preferably, the binder composition is an aqueous paint binder composition.

Preferably, the binder composition is a decorative paint binder composition. Preferably, the binder composition is a protective paint binder composition. Alternatively, the binder composition is a water repellent impregnation agent binder composition, preferably for textile or wall use.

During the polymerization process, monomers of general formula **I** and of general formula **II** (if present) polymerize i.e. hydrolyse and the silanols, hydrocarbyloxy or acetoxy silanes condense and release alcohol, R³³COOH, R³⁴COOH or water. The alcohol, R³³COOH, R³⁴COOH or water is separated, usually distilled out of the reaction mixture to leave the polymer product generally with a [-O-Si-O-Si-] backbone. Accordingly, R¹ (and R⁸ if present) should be chosen to be any suitable moiety which allows this polymerization to proceed at an advantageous rate taking into account factors such as the chemical properties of R¹ (and R⁸) as well as steric properties. By chemical properties it is meant not only the potential of Si-OR¹ (Si-OR⁸) to undergo hydrolysis and therefore polymerize and liberate alcohol, R³³COOH, R³⁴ COOH or water, but also consideration should be given to other chemicals present in the reaction system and an R¹ (R⁸) group should be chosen which does not preferentially react with these other groups under the reaction conditions, thus avoiding polymerization.

Preferably, R¹ is chosen such that R¹O- is a good leaving group. By the term good leaving group, it is meant that the R¹O- group has good energetic stability when it has departed from the silicon atom to which it was bound.

Preferably, R⁸ is chosen such that R⁸O- is a good leaving group. By the term good leaving group, it is meant that the R⁸O- group has good energetic stability when it has departed from the silicon atom to which it was bound.

Molecules having a pKa of less than or equal to 16, more preferably, less than or equal to 15, most preferably less than or equal to 14 (measured in H₂O at 298K) may be considered as good leaving groups.

Preferably, R^{X} and/or R^{Y} is any C₁ to C₁₀ bivalent organic bridging group.

Preferably, R^{X} and/or R^{Y} is independently selected from any alkylene, alkenylene, alkynylene, aralkylene or arylene group, or any combination thereof.

By the term at least one nitrogen radical within the group -NR²R³ is directly bonded to an R^{z} group, it should be understood that the said at least one nitrogen radical referred to may not only be the -NR²R³ radical, but may alternatively or additionally be present in the R² group, the R³ group, or both. For example, if R² or R³ are selected as -R^{y}-NR^{v}R^{w}, then the at least one nitrogen radical referred to may be -R^{y}-NR^{v}R^{w} radical in the first or a succeeding -R^{Y}-NR^{V}R^{W} group.

For the avoidance of doubt, where R^{z} is the cyclic fragment of formula **VI,** -C(O)R³²-, it is meant that one or more of the R² and R³ or R^{V} and R^{W} have together formed a cyclic group such that the groups -NR²R³ or -NR^{V}R^{W} may independently be represented by the formula **VI,** thus, in such a scenario, at least one of the at least one nitrogen radical within the group -NR²R³ being directly bonded to the group R^{z} may be represented by formula **VI.**

The term "alk" or "alkyl", as used herein unless otherwise defined, relates to saturated hydrocarbon radicals being straight, branched, cyclic or polycyclic moieties or combinations thereof and contain 1 to 20 carbon atoms, preferably 1 to 10 carbon atoms, more preferably 1 to 8 carbon atoms, still more preferably 1 to 6 carbon atoms, yet more preferably 1 to 4 carbon atoms. These radicals may be optionally substituted with a chloro, bromo, iodo, cyano, nitro, OR¹⁹, OC(O)R²⁰, C(O)R²¹, C(O)OR²², NR²³R²⁴, C (O) NR²⁵R²⁶, SR²⁷, C(O)SR²⁷, C(S)NR²⁵R²⁶, aryl or Het, wherein R¹⁹ to R²⁷ each independently represent hydrogen, aryl or alkyl, and/or be interrupted by one or more oxygen or sulphur atoms, or by silano or dialkylsiloxane groups. Examples of such radicals may be independently selected from methyl, ethyl, n-propyl, isopropyl, n-butyl, isobutyl, sec-butyl, tert-butyl, 2-methylbutyl, pentyl, iso-amyl, hexyl, cyclohexyl, 3-methylpentyl, octyl and the like. The term "alkylene", as used herein, relates to a bivalent radical alkyl group as defined above. For example, an alkyl group such as methyl which would be represented as -CH₃, becomes methylene, -CH₂-, when represented as an alkylene. Other alkylene groups should be understood accordingly.

The term "alkenyl", as used herein, relates to hydrocarbon radicals having one or several, preferably up to 4, double bonds, being straight, branched, cyclic or polycyclic moieties or combinations thereof and containing from 2 to 18 carbon atoms, preferably 2 to 10 carbon atoms, more preferably from 2 to 8 carbon atoms, still more preferably 2 to 6 carbon atoms, yet more preferably 2 to 4 carbon atoms. These radicals may be optionally substituted with a hydroxyl, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or alkyl, and/or be interrupted by one or more oxygen or sulphur atoms, or by silano or dialkylsiloxane groups. Examples of such radicals may be independently selected from alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like. The term "alkenylene", as used herein, relates to a bivalent radical alkenyl group as defined above. For example, an alkenyl group such as ethenyl which would be represented as -CH=CH₂, becomes ethenylene, -CH=CH-, when represented as an alkenylene. Other alkenylene groups should be understood accordingly.

The term "alkynyl", as used herein, relates to hydrocarbon radicals having one or several, preferably up to 4, triple bonds, being straight, branched, cyclic or polycyclic moieties or combinations thereof and having from 2 to 18 carbon atoms, preferably 2 to 10 carbon atoms, more preferably from 2 to 8 carbon atoms, still more preferably from 2 to 6 carbon atoms, yet more preferably 2 to 4 carbon atoms. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or lower alkyl, and/or be interrupted by one or more oxygen or sulphur atoms, or by silano or dialkylsiloxane groups. Examples of such radicals may be independently selected from alkynyl radicals include ethynyl, propynyl, propargyl, butynyl, pentynyl, hexynyl and the like. The term "alkynylene", as used herein, relates to a bivalent radical alkynyl group as defined above. For example, an alkynyl group such as ethynyl which would be represented as -C≡CH, becomes ethynylene, -C≡C-, when represented as an alkynylene. Other alkynylene groups should be understood accordingly.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or lower alkyl, and/or be interrupted by one or more oxygen or sulphur atoms, or by silano or dialkylsilcon groups. Examples of such radicals may be independently selected from phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like. The term "arylene", as used herein, relates to a bivalent radical aryl group as defined above. For example, an aryl group such as phenyl which would be represented as -Ph, becomes phenylene, -Ph-, when represented as an arylene. Other arylene groups should be understood accordingly.

The term "aralkyl" as used herein, relates to a group of the formula alkyl-aryl, in which alkyl and aryl have the same meaning as defined above and may be attached to an adjacent radical via the alkyl or aryl part thereof. Examples of such radicals may be independently selected from benzyl, phenethyl, dibenzylmethyl, methylphenylmethyl, 3- (2-naphthyl)-butyl, and the like. The term "aralkylene", as used herein, relates to a bivalent radical aralkyl group as defined above. For example, an aralkyl group such as benzyl which would be represented as -Bn, becomes benzylene, -Bn-, when represented as an aralkylene. Other aralkylene groups should be understood accordingly.

The term "Het", when used herein, includes four-to-twelve-membered, preferably four-to-ten-membered ring systems, which rings contain one or more heteroatoms selected from nitrogen, oxygen, sulphur and mixtures thereof, and which rings may contain one or more double bonds or be nonaromatic, partly aromatic or wholly aromatic in character. The ring systems may be monocyclic, bicyclic or fused. Each "Het" group identified herein is optionally substituted by one or more substituents selected from halo, cyano, nitro, oxo, lower alkyl (which alkyl group may itself be optionally substituted or terminated as defined below) OR¹⁹, OC(O)R²⁰, C(O)R²¹, C(O)OR²², NR²³R²⁴, C(O)NR²⁵R²⁶, SR²⁷, C(O)SR²⁷ or C(S)NR²⁵R²⁶ wherein R¹⁹ to R²⁷ each independently represent hydrogen, aryl or lower alkyl (which alkyl group itself may be optionally substituted or terminated as defined below). The term "Het" thus includes groups such as optionally substituted azetidinyl, pyrrolidinyl, imidazolyl, indolyl, furanyl, oxazolyl, isoxazolyl, oxadiazolyl, thiazolyl, thiadiazolyl, triazolyl, oxatriazolyl, thiatriazolyl, pyridazinyl, morpholinyl, pyrimidinyl, pyrazinyl, quinolinyl, isoquinolinyl, piperidinyl, pyrazolyl and piperazinyl. Substitution at Het may be at a carbon atom of the Het ring or, where appropriate, at one or more of the heteroatoms.

"Het" groups may also be in the form of an N oxide.

For the avoidance of doubt, the reference to alkyl, alkenyl, alkynyl, aryl or aralkyl in composite groups herein should be interpreted accordingly, for example the reference to alkyl in aminoalkyl or alk in alkoxyl should be interpreted as alk or alkyl above etc.

Preferably, each R¹ group is independently selected from hydrogen or any C₁ to C₆ alkyl group.

Examples of suitable R¹ groups include hydrogen, methyl, ethyl, propyl, iso-propyl, butyl, iso-butyl, sec-butyl, tert-butyl, pentyl, 2-methyl-pentyl, 3-methyl-pentyl, 4-methyl-pentyl, cyclopentyl, methyl-cyclopentyl, hexyl, cyclohexyl, formyl, acetyl, propionyl, butyryl, trifluoroacetyl. Preferably, each R¹ group is independently selected from hydrogen or any C₁ to C₄ alkyl group. More preferably, each R¹ is independently selected from hydrogen, methyl, ethyl, propyl or butyl groups. Most preferably, each R¹ is either a methyl group or an ethyl group.

Preferably, at least one of the groups R² or R³ is an R^{z} group.

Preferably, each R⁴ group is independently selected from any of: hydrogen, methyl, ethyl, propyl, iso-propyl, butyl, iso-butyl, sec-butyl or tertiary butyl group. In a particularly preferred embodiment, each R⁴ group is independently selected from hydrogen, methyl or ethyl.

Preferably, each R³³ group is independently selected from any of: hydrogen, methyl, ethyl, propyl, iso-propyl, butyl, iso-butyl, sec-butyl or tertiary butyl group. In a particularly preferred embodiment, each R³³ group is independently selected from hydrogen, methyl or ethyl.

Preferably, each R³⁴ group is independently selected from any of: hydrogen, methyl, ethyl, propyl, iso-propyl, butyl, iso-butyl, sec-butyl or tertiary butyl group. In a particularly preferred embodiment, each R³⁴ group is independently selected from hydrogen, methyl or ethyl.

Preferably, each R⁵ group is independently selected from any C₁ to C₄ alkyl group or C₆ to C₁₀ aryl group.

Most preferably, each R⁵ group is independently selected from any of: methyl, ethyl, propyl, iso-propyl, butyl, iso-butyl, sec-butyl, tertiary butyl, phenyl or benzyl groups. In a particularly preferred embodiment, each R⁵ group is independently selected from methyl or ethyl.

Preferably, each R^{z} group is independently selected from -(C=O)R⁴.

In a particularly preferred embodiment, R^{z} is a -(C=O)H group. The monomer of general formula I comprises at least one N-formyl terminal group, that is at least one >N-(C=O)H terminal group.

Preferably, each R³ group is independently selected from hydrogen, methyl, ethyl, propyl, iso-propyl, butyl, iso-butyl, sec-butyl, tert-butyl, -(CH₂)ₚN[(C=O)H]R^{W},-(CH₂)ₚN[(C=O)CH₃]R^{W}, - (CH₂) ₚN [(C=O) CH₂CH₃]R^{W},-(CH₂)ₚNH[(C=O)H], -(CH₂)ₚNH[(C=O)CH₃],-(CH₂)ₚNH [(C=O) CH₂CH₃], -(CH₂)ₚN [(C=O) H] CH₃,-(CH₂)ₚN[(C=O)CH₃]CH₃, where p may equal 1, 2, 3 or 4. Preferably, p=1, 2 or 3, more preferably p = 2 or 3. In a particularly preferred embodiment p = 2.

In a particularly preferred embodiment, each R³ group is selected from hydrogen, methyl, ethyl, propyl,-(CH₂)ₚN[(C=O)H]R^{W}, -(CH₂)ₚN[(C=O)CH₃]R^{W}, -(CH₂)ₚNH[(C=O)H] or -(CH₂)ₚNH[(C=O)CH₃], where p is as defined above.

Preferably, each R⁸ group is independently selected from hydrogen, or any C₁ to C₆ alkyl group. Examples of suitable R⁸ groups include but are not restricted to hydrogen, methyl, ethyl, propyl, iso-propyl, butyl, iso-butyl, 2 methyl butyl, 3 methyl butyl, tertiary butyl, pentyl, 2 methyl pentyl, 3 methyl pentyl, 4 methyl pentyl, cyclopentyl, methyl cyclopentyl, hexyl, cyclohexyl. More preferably, each R⁸ group is independently selected from hydrogen or any C₁ to C₄ alkyl group. More preferably, each R⁸ group is independently selected from hydrogen, methyl, ethyl, propyl or butyl groups or branched variants thereof. Most preferably, each R⁸ is either a methyl group or an ethyl group.

Examples of suitable R⁹ groups include but are not restricted to: hydrogen, methyl, ethyl, propyl, iso-propyl, butyl, isobutyl, tert-butyl, pentyl, cyclopentyl, hexyl, cyclohexyl, heptyl, octyl, vinyl, phenyl, 3-glycidyloxypropyl, 3,4-epoxycyclohexyl-ethyl, 3-methacryloyloxypropyl, acetoxy ethyl, acetoxy methyl, mercaptopropyl.

In an alternative embodiment, each R⁴ group may be independently selected from hydrogen or any alkyl, alkenyl, alkynyl, aralykyl, aryl or any group having the general formula **V**: 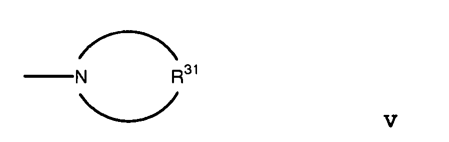 where R³¹ is defined as for R^{X} above.

Preferably, each R³¹ is independently selected from any C₃ to C₆ alkylene group. Preferably, each R³¹ is independently selected from any C₄ or C₅ alkylene group.

Examples of suitable R³¹ groups include but are not restricted to propylene, butylene, pentylene and hexylene.

Examples of suitable groups having the formula **V** include but are not restricted to piperidine and pyrollidine.

Preferably, each R⁶ group is independently selected from any of: hydrogen, methyl, ethyl, propyl, iso-propyl, butyl, iso-butyl, sec-butyl or tertiary butyl group. In a particularly preferred embodiment, each R⁶ group is independently selected from hydrogen, methyl or ethyl.

Preferably, each R⁷ group is independently selected from any of: hydrogen, methyl, ethyl, propyl, iso-propyl, butyl, iso-butyl, sec-butyl or tertiary butyl group. In a particularly preferred embodiment, each R⁷ group is independently selected from hydrogen, methyl or ethyl.

Preferably, if R⁶ is selected as a hydrogen group, then R⁷ is independently selected from alkyl, alkenyl, alkynyl, aralkyl or an aryl group.

Preferably, each R⁷ group is independently selected from any C₁ to C₆ alkyl or alkenyl group.

Therefore, in the further alternative embodiment, examples of preferred R^{z} groups include but are not restricted to - (C=O)-NHCH₃, -(C=O)-NHCH₂CH₃, -(C=O)-NHCH(CH₃)CH₃, -(C=O)-NHCH₂CH (CH₃) CH₃, - (C=O)-NHC(CH₃) ₃, - (C=O)-N(CH2CH₃)₂,-(C=O)-N(CH₃)₂,-(C=O)-N(iPr)₂,-(C=O)-N(CH₂)₄CH₂,-(C=O)-N(CH₂)₄CH₂.

Preferably, each R³² is independently selected from any C₂ to C₅ alkylene group. Preferably, each R³² is independently selected from any C₃ or C₄ alkylene group.

Examples of suitable R³² groups include but are not restricted to ethylene, propylene, butylene and pentylene.

Preferably, m = 2 or 3. Most preferably, m = 3.

Preferably, q = 2, 3 or 4. More preferably, q = 2 or 3. In a most preferred embodiment, q = 3.

In another preferred embodiment, q = 4.

Preferably, each R^{V} and R^{W} are independently chosen such that the group -R^{Y}-NR^{V}R^{W} is repeated no more than 5 times between the silicon radical of general formula **I** and each terminal -R^{Y}-NR^{V}R^{W} group.

Preferably, each R^{V} and R^{W} are independently chosen such that the group -R^{Y}-NR^{V}R^{W} is repeated no more than 4 times between the silicon radical of general formula **I** and each terminal -R^{Y}-NR^{V}R^{W} group.

Preferably, each R^{V} and R^{W} are independently chosen such that the group -R^{Y}-NR^{V}R^{W} is repeated no more than 3 times between the silicon radical of general formula **I** and each terminal -R^{Y}-NR^{V}R^{W} group.

Preferably, the monomer of general formula I contains less than 15 nitrogen radicals, more preferably, less than 12 nitrogen radicals, more preferably less than 10 nitrogen radicals, most preferably, less than 8 nitrogen radicals.

Examples of suitable compounds having general structure I that may be used include, but are not restricted to, any of the following: N-[3-(trimethoxysilyl)propyl]-formamide (CAS RN: [88542-71-6]), N-[3-(triethoxysilyl)propyl]-formamide (CAS RN:[76524-94-2]), N-[2-(formylamino)ethyl]-N-[3-(triethoxysilyl)propyl] -formamide (CAS RN:[112096-22-7]), N-[2-(formylamino)ethyl]-N-[3-(trimethoxysilyl)propyl]-formamide (CAS RN: [112119-91-2]), N-[2-(formylamino)ethyl]-N-[2-formyl[3-(triethoxysilyl)propyl]amino]ethyl]-formamide, N-[3-(triethoxysilyl)propyl]-acetamide (CAS RN:[17053-34-8], N-[3-(trimethoxysilyl)propyl]-acetamide: (CAS RN: [57757-66-1]), N-[2-(acetylamino)ethyl]-N-[3-(trimethoxysilyl)propyl]- acetamide (CAS RN: [28353-43-5]), 3-ureidopropyl-trimethoxysilane (CAS RN: [23843-64-3]).

Examples of suitable compounds having general structure II that may be used include, but are not restricted to, any of the following: methyltriethoxysilane (CAS RN: [2031-67-6]), dimethyldimethoxysilane (CAS RN: [1112-39-6]), hexyltriethoxysilane (CAS RN: [18166-37-5]), octyltriethoxysilane (CAS RN: [2943-75-1]), phenyltrimethoxysilane (CAS RN: [2996-92-1]), 3-(glycidyloxypropyl)-trimethoxysilane (CAS RN: [2530-83-8]), 3-(glycidyloxypropyl)-triethoxysilane (CAS RN: [2602-34-8]), 3-(glycidyloxypropyl)-methyldiethoxysilane (CAS RN: [2897-60-1], 2-(3,4-epoxycyclohexyl)-ethyltrimethoxysilane (CAS RN: [3388-04-3]), 2-(3,4-epoxycyclohexyl)-ethyltriethoxysilane (CAS RN: [10217-34-2]),

Vinyltrimethoxysilane (CAS RN: [2768-02-7]), vinyltriethoxysilane (CAS RN: [78.08-0]), vinylmethyldimethoxysilane (CAS RN: [16753-62-1], 3-(methacryloyloxypropyl)-trimethoxysilane (CAS RN: [2530-85-0]), 3-(methacryloyloxypropyl)-triethoxysilane (CAS RN: [21142-229-0]), 3-(methacryloyloxypropyl)-methyldiethoxysilane (CAS RN: [65100-04-1]), 3-(acryloyloxypropyl)-triethoxysilane (CAS RN: [21142-29-0]), tetraethoxysilane (CAS RN: [78-10-4] ), tetramethoxysilane (CAS RN: [681-84-5] ), acetoxymethyltriethoxysilane (CAS RN: 5630-83-1), 3-mercaptopropyltriethoxysilane (CAS RN: 14814-09-6).

Preferably, the oligomeric or polymeric substance is derived from at least one monomer of the general formula **I** wherein the at least one monomer of general formula **I** is at least 1% by weight of the total monomer used to produce the oligomeric or polymeric substance, more preferably, at least 5% by weight, more preferably, at least 10% by weight.

Preferably, the oligomeric or polymeric substance is formed from at least one monomer of the general formula **I** which comprises at least one N-formyl group.

Preferably, the oligomeric or polymeric substance is formed from at least one monomer of the general formula **I** and one monomer, more preferably at least two monomers of the general formula **II.**

More preferably, the oligomeric or polymeric substance is formed from at least one monomer of the general formula **I** which comprises an N-formyl group and at least one monomer, more preferably at least two monomers of the general formula **II.** Preferably, the oligomeric or polymeric substance is formed from at least one monomer of general formula **I** which comprises an N-formyl group in an amount 1 to 99% w/w, more preferably 5 to 80% w/w, more preferably 10 to 50% w/w, more preferably 15 to 30% w/w, most preferably 15 to 25% w/w of the total monomer used to produce the oligomeric or polymeric substance.

More preferably, the oligomeric or polymeric substance is formed from at least one monomer of the general formula **I** which at least monomer of the general formula **I** comprises an N-formyl group and at least two monomers of the general formula **II,** one of the at least two monomers of the general formula **II** having q = 4. Preferably, the oligomeric or polymeric substance is formed from one of the at least two monomers of the general formula **II** having q = 4 in an amount 1 to 99% w/w, more preferably, 10 to 90% w/w, more preferably, 20 to 80% w/w, more preferably, 40 to 80% w/w, more preferably, 50 to 70% w/w, most preferably 55 to 65% w/w of the total monomer used to produce the oligomeric or polymeric substance.

Most preferably, the oligomeric or polymeric substance is formed from at least one monomer of the general formula **I** which at least one monomer of the general formula **I** comprises an N-formyl group, and at least two monomers of the general formula **II,** one of the at least two monomers of general formula **II** having q = 4, and a second of the at least two monomers of the general formula **II** comprising an epoxy terminal group. Preferably, the oligomeric or polymeric substance is formed from the second of the at least two monomers of the general formula II comprising an epoxy terminal group in an amount 1 to 99% w/w, more preferably 5 to 80% w/w, more preferably 10 to 50% w/w, more preferably 15 to 30% w/w, most preferably 15 to 25% w/w of the total monomer used to produce the oligomeric or polymeric substance.

Preferably, the ratio by weight of the at least one monomer of general formula I:the at least one monomer of general formula II is in the range 1:0.1 to 1:10, more preferably, in the range 1:0.5 to 1:10, more preferably, 1:1 to 1:8, more preferably 1:2 to 1:6, more preferably 1:3 to 1:5, more preferably, 2:7 to 2:9 and most preferably, about 1:4 in the oligomeric or polymeric substance.

In a particularly preferred embodiment, the oligomeric or polymeric substance is formed from at least one monomer of the general formula **I** which at least one monomer of the general formula **I** comprises an N-formyl group, and at least two monomers of the general formula **II,** one of the at least two monomers of general formula **II** having q = 4, and a second of the at least two monomers of the general formula **II** comprising an epoxy terminal group where the ratio (by weight) of the at least one monomer of the general formula **I** comprises an N-formyl group: one of the at least two monomers of general formula **II** having q = 4: a second of the at least two monomers of the general formula **II** comprising an epoxy terminal group is preferably in the range 5 to 60:15 to 90: 5 to 60, more preferably in the range 10 to 35:30 to 80:10 to 35, more preferably in the range 10 to 30:40 to 80: 10 to 30, yet more preferably in the range 15 to 25: 50 to 70: 15 to 25 and in a particularly preferred embodiment, the ratio is approximately 20:60:20.

In a particularly preferred embodiment, the oligomeric or polymeric substance is formed from at least one monomer of the general formula **I** which at least one monomer of the general formula **I** comprises an N-formyl group, and at least one monomer of the general formula **II,** which at least one monomer of the general formula **II** has q = 4 where the ratio (by weight) of the at least one monomer of the general formula **I** comprising an N-formyl group:the at least one monomer of the general formula **II** having q = 4 is preferably 1:0.1 to 1:50, more preferably, 1:0.5 to 1:10, more preferably 1:1 to 1:8 more preferably 1:2 to 1:4, most preferably about 1:3.

In a particularly preferred embodiment, the oligomeric or polymeric substance is formed from at least one monomer of the general formula **I** which at least one monomer of the general formula **I** comprises an N-formyl group, and at least one monomer of the general formula **II,** which at least one monomer of the general formula **II** has a terminal epoxy group where the ratio (by weight) of the at least one monomer of the general formula **I** comprising an N-formyl group:the at least one monomer of the general formula **II** having a terminal epoxy group is preferably 1:0.05 to 1:50, more preferably, 1:0.1 to 1:10, more preferably 1:0.5 to 1:5 more preferably 1:0.7 to 1:2, most preferably about 1:1.

In a particularly preferred embodiment, the oligomeric or polymeric substance is formed from at least two monomers of the general formula **II,** at least a first of the at least two monomers of the general formula **II** having q = 4, and at least a second of the at least two monomers of the general formula **II** having an epoxy terminal group where the ratio (by weight) of the first of the at least two monomers of the general formula **II** having q = 4:the second of the at least two monomers of the general formula **II** having an epoxy terminal group is preferably 1:0.1 to 1:50, more preferably, 1:0.5 to 1:10, more preferably 1:1 to 1:8 more preferably 1:2 to 1:4, most preferably about 1:3.

Preferably, the oligomeric or polymeric substance is formed from 0.1 to 100% (by weight of the total monomer used to produce the oligomeric or polymeric substance) of at least one monomer of the general formula **I.** Preferably, the oligomeric or polymeric substance is formed from 1 to 100% (by weight of the total monomer used to produce the oligomeric or polymeric substance) of at least one monomer of the general formula **I.** Preferably, the oligomeric or polymeric substance is formed from 5 to 100% (by weight of the total monomer used to produce the oligomeric or polymeric substance) of at least one monomer of the general formula **I.** Preferably, the oligomeric or polymeric substance is formed from 6 to 100% (by weight of the total monomer used to produce the oligomeric or polymeric substance) of at least one monomer of the general formula **I.** Preferably, the oligomeric or polymeric substance is formed from 0.1 to 99.9% (by weight of the total monomer used to produce the oligomeric or polymeric substance) of at least one monomer of the general formula **I.** Preferably, the oligomeric or polymeric substance is formed from 1 to 99% (by weight of the total monomer used to produce the oligomeric or polymeric substance) of at least one monomer of the general formula **I.** Preferably, the oligomeric or polymeric substance is formed from 10 to 70% (by weight of the total monomer used to produce the oligomeric or polymeric substance) of at least one monomer of the general formula **I.** Preferably, the oligomeric or polymeric substance is formed from 15 to 60% (by weight of the total monomer used to produce the oligomeric or polymeric substance) of at least one monomer of the general formula **I.** Preferably, the oligomeric or polymeric substance is formed from 15 to 40% (by weight of the total monomer used to produce the oligomeric or polymeric substance) of at least one monomer of the general formula **I.** Preferably, the oligomeric or polymeric substance is formed from 15 to 30% (by weight of the total monomer used to produce the oligomeric or polymeric substance) of at least one monomer of the general formula **I.** Preferably, the oligomeric or polymeric substance is formed from 15 to 25% (by weight of the total monomer used to produce the oligomeric or polymeric substance) of at least one monomer of the general formula **I.**

Preferably, the oligomeric or polymeric substance is further formed from 1 to 99% (by weight of the total monomer used to produce the oligomeric or polymeric substance) of at least one monomer of general formula **II.** Preferably, the oligomeric or polymeric substance is further formed from 5 to 90% (by weight of the total monomer used to produce the oligomeric or polymeric substance) of at least one monomer of general formula **II.** Preferably, the oligomeric or polymeric substance is further formed from 10 to 90% (by weight of the total monomer used to produce the oligomeric or polymeric substance) of at least one monomer of general formula **II.** Preferably, the oligomeric or polymeric substance is further formed from 30 to 90% (by weight of the total monomer used to produce the oligomeric or polymeric substance) of at least one monomer of general formula **II.** Preferably, the oligomeric or polymeric substance is further formed from 50 to 90% (by weight of the total monomer used to produce the oligomeric or polymeric substance) of at least one monomer of general formula **II.** Preferably, the oligomeric or polymeric substance is further formed from 60 to 90% (by weight of the total monomer used to produce the oligomeric or polymeric substance) of at least one monomer of general formula **II.** Preferably, the oligomeric or polymeric substance is further formed from 75 to 85% (by weight of the total monomer used to produce the oligomeric or polymeric substance) of at least one monomer of general formula **II.**

Preferably, the oligomeric or polymeric substance is further formed from at least two monomers having general formula **II.** Preferably, the oligomeric or polymeric substance is formed from a first of the at least two monomers of general formula **II** in an amount 50 to 90(by weight of the total monomer used to produce the oligomeric or polymeric substance) and from 10 to 30% (by weight of the total monomer used to produce the oligomeric or polymeric substance) of a second of the at least two monomers having general formula **II.**

Preferably, the oligomeric or polymeric substance is present in the aqueous binder composition between 1% and 99 %, more preferably between 1% and 70% by dry weight of the binder composition. Preferably, the oligomeric or polymeric substance is present in the aqueous binder composition between 6 and 60% by dry weight of the binder composition. More preferably, the oligomeric or polymeric substance is present in the aqueous binder composition in an amount between 6% and 50% by dry weight of the binder composition, more preferably, the oligomeric or polymeric substance is present in the aqueous binder composition in an amount between 8% and 40% by dry weight of the binder composition, most preferably, the oligomeric or polymeric substance is present in the aqueous binder composition in an amount between 10% and 30% by dry weight of the binder composition.

According to a second aspect of the present invention, there is provided a method of preparing an oligomeric or polymeric compound as claimed in the accompanying claims.

The released alcohol, R³³COOH, R³⁴COOH and/or water may be removed by any method, such as, for example, distillation.

Preferably, the R¹O- removal agent comprises water. Preferably, the R¹O- removal agent further comprises at least one alcohol. Preferably, the R¹O- removal agent comprises a mixture of water and at least one alcohol. Preferably, the at least one alcohol has a boiling point of less than 100°C (measured at 10⁵ Pa pressure). Preferably, the at least one alcohol is any C₁ to C₈ alcohol. Preferably, the at least one alcohol is any C₁ to C₆ alcohol. Examples of suitable at least one alcohol include but are not restricted to methanol, ethanol, isopropanol, butanol and the like. Preferably, the at least one alcohol is added together with the at least one monomer of the general formula **I** and the at least a second monomer having the general formula **II,** or alternatively, an at least one alcohol/water mixture may be added to the at least one monomer of the general formula **I** and the at least a second monomer having the general formula **II.** Preferably, the at least one alcohol is present in the reaction mixture in an amount between 1 to 40% by weight of the total weight of the at least one monomer of the general formula **I** and the at least a second monomer having the general formula **II.** More preferably, the at least one alcohol is present in the reaction mixture in an amount 5 to 25% by weight the at least one monomer of the general formula **I** and the at least a second monomer having the general formula **II.**

It should be appreciated by one skilled in the art that the above mentioned preferred features with respect to the R¹O- removal agent similarly apply to the optional R⁸O-removal agent.

Preferably, step (i) takes place at a temperature between 0°C and 90°C. More preferably, step (i) takes place at a temperature between 10°C and 60°C. Most preferably, step (i) takes place at a temperature between 20°C and 50°C.

Preferably, the reaction of step (ii) takes place at a temperature between 0°C and 90°C. More preferably, the reaction takes place at a temperature between 10°C and 60°C. Most preferably, the reaction takes place at a temperature between 20°C and 50°C. Preferably, the reaction is catalysed.

Preferably, the catalyst comprises any suitable catalyst. Preferably the catalyst comprises a transition metal or group 14 or 15 chelate compound. Preferably, the catalyst comprises a transition metal or group 14 or 15 organic chelate compound. Preferably, the catalyst comprises a transition metal or group 14 or 15 alkoxy chelate compound. Preferably the catalyst is water soluble. More preferably, the catalyst comprises a transition metal or group 14 or 15 poly-alkoxy chelate compound. The catalyst may be stabilised by an alkanolamine derivative. Preferably, the catalyst is selected from compounds of any of the following: titanium, zirconium, hafnium, tin, antimony or germanium. In a particularly preferred embodiment, the catalyst comprises a water soluble alkoxy titanate, zirconate or stannate compound stabilised by an alkanolamine derivative. Most preferably, the catalyst comprises an alkoxy titanate compound.

Examples of suitable catalysts include TYZOR (RTM), commercially available from DuPont, and VERTEC (RTM), commercially available from Johnson Matthey.

Preferably, the reaction takes place at a suitable pH in a range to suit the stability of the binder.

Preferably, the reaction takes place in the presence of a pH adjuster operable to adjust the pH of the reaction mixture. Preferably, the pH adjuster comprises at least one acid.

Preferably, the pH adjuster is present in the reaction in an amount sufficient to adjust the pH of the reaction mixture to between 6 and 1, more preferably, between 5 and 1, and most preferably, between 4 and 1.5.

In one embodiment, the pH adjuster may comprise the acid R³³COOH generated during the reaction.

Alternatively or additionally, the pH adjuster may comprise the acid R ³⁴ COOH generated during the reaction.

Preferably, the at least one acid is any suitable organic or inorganic acid. Preferably, the at least one acid has a pKa in aqueous solution at 298K of less than 5, more preferably, less than 4.

Preferably, the pH adjuster is a strong Br∅ensted acid. By strong Br∅ensted acid it is meant a Br∅ensted acid having a pKa (in aqueous solution at 298K) between -12 and -5, and preferably between -10 and -6.

Alternatively or additionally, the pH adjuster may be a weak Br∅ensted acid. By weak Br0ensted acid it is meant a Br∅ensted acid having a pKa (in aqueous solution at 298K) between -5 and +10, and preferably between +3 and +5.

Preferably, the at least one acid is water soluble.

Examples of suitable at least one acids include but are not restricted to any of the following, alone or in combination: formic, acetic, propionic, butyric, oxalic, malonic, succinic, glutaric, adipic, citric, hydrochloric, sulphuric, phosphoric, nitric, boric, trifluoroacetic, methanesulfonic, trifluoro methanesulfonic acid.

The at least one acid may alternatively or additionally comprise at least one water stable Lewis acid. Examples of suitable Lewis acids include but are not restricted to LiCl, FeCl₃, ZnCl₂, CaCl₂ and the like.

The components of the second aspect of the invention may be contacted in any order. For instance, the at least one acid may be firstly introduced to the silanes and then later to the water or the water/at least one alcohol mixture or, alternatively, the silanes, the at least one acid and the water or water/at least one alcohol mixture may all be introduced at the same time. Beneficial results may be achieved by adding different amounts of the at least one acid at different stages of the polymerization reaction.

Additives or stabilising agents may also be introduced during the preparation of the binder. Examples of such include but are not restricted to colloidal silica, silica sols, antifoaming agents or buffers.

One embodiment of the method includes adding the R¹O-removal agent to the other ingredients. In an alternate embodiment, the silanes and other agents, if any, are added to the R¹O- removal agent. In a further alternate embodiment, a fraction of the ingredients are mixed with the R¹O- removal agent and then added to the rest of the ingredients.

The removal of alcohol, R³³COOH, R³⁴COOH and/or water may be performed at atmospheric pressure or under vacuum. The removal may start during the mixing stage as well as after completion of hydrolysis of the silanes. The evolution of hydrolysis of silanes may be followed by any conventional analytical method such as gas chromatography, infra-red spectroscopy, Raman spectroscopy or nuclear magnetic resonance.

The amount of removed alcohol, R³³COOH, R³⁴COOH and/or water may be determined by any suitable analytical method.

The amount of R¹O- and, optionally, R⁸O- removal agent used in the polymerization reaction may be adjusted in order to reach a desired final solids amount after the distillation process. The weight of the alcohols may be replaced by the same weight in R¹O- or, optionally, R⁸O-removal agent during the process or, preferably, substantially after completion of the process.

According to a third aspect of the present invention there is provided a paint composition comprising a binder composition as defined in the accompanying claims.

The paint may be any water based silicone decorative or protective paint such as water repellent, dirt repellent paint for concrete and facades, impregnation agents for indoor or outdoor walls, water repellent agents for textiles.

Preferably, the paint is an anticorrosion paint. Preferably, the paint is a primer, more preferably a shop primer. In an especially preferred embodiment, the paint is a weldable shop primer.

According to a fourth aspect of the present invention there is provided a two component paint composition as claimed in the accompanying claims.

The two component paint composition may further comprise one or more of the following in either component: non conductive pigments, thickeners, rheological additives, colloidal silica, coated colloidal silica and/or at least one silica sol. Preferably, the first component further comprises one or more of the following: non-conductive pigments, thickeners, rheological additives, colloidal silica, coated colloidal silica or silica sol.

Examples of suitable non conductive pigments include titanium dioxide, red iron oxide, calcium carbonate, talc, aluminium silicate and yellow iron oxide.

Preferably, the two component paint composition comprises at least one filler. Preferably, the second component is a powder. Preferably, the at least one filler is present in the second component, preferably in an amount between 1 and 99% of the dry weight of the second component. More preferably, the at least one filler is present in the second component in an amount between 20 and 80% of the dry weight of the second component. More preferably, the at least one filler is present in the second component in an amount between 30 and 60% of the dry weight of the second component. Most preferably, the at least one filler is present in the second component in an amount between 40 and 50% of the dry weight of the second component.

Preferably, the at least one filler comprises a mineral filler.

Preferably, the at least one filler comprises one or more of the following: iron oxides (other than micaceous iron oxide); natural and precipitated barium sulphate, barytes, blanc fixe; aluminium silicate, kaolin, kaolinite, china clay; magnesium silicate and magnesium hydrosilicate, mica, talc, chlorite, tremolite; silica, surface treated silica, amorphous quartz, crystalline quartz, fumed silica; aluminium oxide and hydrate, bauxite, calcined bauxite; calcium magnesium carbonate, dolomite; natural and precipitated calcium carbonate; aluminium silicates, feldspar; nepheline syenite; calcium silicates, wollasionite; zinc oxide; zinc phosphate; graphite; bismuth vanadate; lead chromate; silicium carbide; zeolites; pyrophyllite; glass flakes; iron phosphide; nickel phosphide; hollow spheres; and aluminium. Also possible are other families of sulphates, carbonates, silicates, oxides and vanadates.

Preferably, the second component comprises zinc. Preferably, the zinc is present as finely divided zinc, zinc flake, zinc powder or zinc dust. Preferably, the zinc is present in the second component in an amount 1 to 99% of the dry weight of the second component. More preferably, the zinc is present in the second component in an amount 20 to 80% of the dry weight of the second component. More preferably, the zinc is present in the second component in an amount 30 to 60% of the dry weight of the second component. Most preferably, the zinc is present in the second component in an amount 40 to 50% of the dry weight of the second component.

Preferably, the two component paint composition comprises a colour pigment. Preferably, the colour pigment is present in either the first or second component in an amount 0.1 to 50% of the dry weight of whichever component it is present in. More preferably, the colour pigment is present in either the first or second component in an amount 1 to 15% of the dry weight of whichever component it is present in.

Preferably, the second component comprises a conductive pigment. Conductive pigments are known to improve both anti corrosive properties (by electrically connecting zinc particles with the substrate) and arc welding properties. Preferably, the conductive pigment is selected from micaceous iron oxide, ferro alloy, di-iron phosphide, copper flakes, nickel flakes stainless steel flakes, aluminium flakes and the like. Preferably, the conductive pigment is present in the second component in an amount 60 to 20% of the dry weight of the second component. More preferably, the conductive pigment is present in the second component in an amount 40 to 25% of the dry weight of the second component.

Optionally, the two component paint composition may further comprise suitable additives such as anti-settling, defoamers, thickening agents, rust inhibitor or wetting agents.

Typical thickening agents are acrylate polymers or hydroxyethyl cellulose polymers; when used they are preferably added in an amount up to 2% w/w of the dry weight of the two component paint composition, more preferably, up to 1% w/w of the dry weight of the two component paint composition. Typical anti settling agents are clay type materials like bentonite, glycerol trihydroxystearate, polyamides or polyethylene wax; when used they are preferably added in an amount up to 4% w/w of the dry weight of the two component paint composition, more preferably up to 2% w/w of the dry weight of the two component paint composition. Typical wetting agents are ethoxylated alcohols (e.g. the product with CAS RN=68439-45-2).

Optionally, the two component paint composition may further comprise suitable anti-corrosive pigments, such as molybdates, phosphates, borates or zinc oxide.

Optionally, the two component paint composition may further comprise suitable catalysts. Preferably, the catalyst comprises a transition metal or group 14 or 15 chelate compound. Preferably, the catalyst comprises a transition metal or group 14 or 15 organic chelate compound. Preferably, the catalyst comprises a transition metal or group 14 or 15 alkoxy chelate compound. Preferably the catalyst is water soluble. More preferably, the catalyst comprises a transition metal or group 14 or 15 poly-alkoxy chelate compound. The catalyst may be stabilised by an alkanolamine derivative. Preferably, the catalyst is selected from compounds of any of the following: titanium, zirconium, hafnium, tin, antimony or germanium. In a particularly preferred embodiment, the catalyst comprises a water soluble alkoxy titanate, zirconate or stannate compound stabilised by an alkanolamine derivative. Most preferably, the catalyst comprises an alkoxy titanate compound.

Examples of suitable catalysts include but are not restricted to TYZOR LA (RTM), commercially available from DuPont, or VERTEC XL175 (RTM), commercially available from Johnson Matthey.

Preferably, the mixing ratio, by weight of the components, between the first and the second component lies between 1:20 and 1:0.05, more preferably, between 1:10 and 1:0.1, most preferably, between 1:2 and 1:0.1.

The two components of the two component paint composition are preferably introduced to each other substantially immediately prior to application of the paint composition to the substrate; preferably, less than 2 hours before application, more preferably, less than 1 hour before application, most preferably, less than 30 minutes before application. The two components are preferably mixed together prior to use.

Preferably, the percentage w/w solids of the two component paint composition are between 70% and 10%, more preferably, between 40% and 20%, and most preferably between 35% and 25%.

Preferably, after the two part paint composition is applied to a substrate it cures to form a dry film. Preferably, zinc dust is present in the dry film between 80% and 1%, more preferably between 60% and 20%, and most preferably between 50% and 30% by weight of the dry film.

According to a fifth aspect of the present invention there is provided a siloxane polymer composition as claimed in the accompanying claims.

Preferably, the monomer of formula **I** is at least 10% by weight of the total monomer used to produce the siloxane polymer of the fifth aspect.

Preferably, the monomer of formula **I** is at least 15% by weight of the total monomer used to produce the siloxane polymer of the fifth aspect.

Preferably, the monomer of formula **I** is at least 30% by weight of the total monomer used to produce the siloxane polymer of the fifth aspect.

Preferably, the monomer of formula **I** is at least 50% by weight of the total monomer used to produce the siloxane polymer of the fifth aspect.

Preferably, the monomer of formula **II** is at least 5% by weight of the total monomer used to produce the siloxane polymer of the fifth aspect.

Preferably, the monomer of formula **II** is at least 10% by weight of the total monomer used to produce the siloxane polymer of the fifth aspect.

Preferably, the monomer of formula **II** is at least 15% by weight of the total monomer used to produce the siloxane polymer of the fifth aspect.

Preferably, the monomer of formula **II** is at least 30% by weight of the total monomer used to produce the siloxane polymer of the fifth aspect.

According to a sixth aspect of the present invention there is provided a binder composition comprising a siloxane polymer, P, as claimed in the accompanying claims.

Preferably, the polymer P is a copolymer.

Examples of suitable R¹⁰ groups include but are not restricted to: hydrogen, methyl, ethyl, propyl, iso-propyl, butyl, isobutyl, tert-butyl, pentyl, cyclopentyl, hexyl, cyclohexyl, heptyl, octyl, vinyl, phenyl, 3-glycidyloxypropyl, 3,4-epoxycyclohexyl-ethyl, 3-methacryloyloxypropyl, acetoxy ethyl, acetoxy methyl, mercaptopropyl.

Preferably, the at least one side group or terminal group of general formula **III** is present in the polymer in an amount between 0.01 to 2 per silicon radical present in the polymer backbone.

Preferably, the at least one side group or terminal group of general formula **III** is present in the polymer in an amount between 0.05 to 1.5 per silicon radical present in the polymer backbone.

Preferably, the at least one side group or terminal group of general formula **III** is present in the polymer in an amount between 0.1 to 1 per silicon radical present in the polymer backbone.

Preferably, the at least one side group or terminal group of general formula **III** is present in the polymer in an amount between 0.15 to 0.8 per silicon radical present in the polymer backbone.

Preferably, the at least one side group or terminal group of general formula **III** is present in the polymer in an amount between 0.2 to 0.6 per silicon radical present in the polymer backbone.

In one embodiment, the siloxane polymer P may be made by reacting the side groups or terminal groups of an existing polymer. For example, a siloxane polymer having omega amino groups may be acylated to produce a siloxane polymer P of the sixth aspect.

All of the features disclosed herein may be combined with any of the above aspects and in any combination.

### Examples

### Preparative Example 1 (Silane A) :

### Preparation of Silane A N-[3-(triethoxysilyl)propyl]-formamide (CAS RN:[76524-94-2]):

553.4 g of 3-(triethoxysilyl)propyl]-amine and 277.8 g of ethyl formate are allow to react at room temperature for 18h, excess of ethyl formate and ethanol is then evaporated under *vacuum* to furnish Silane-A.

### Preparative Example 2 (Silane B) :

### Preparation of Silane B (N-[2-(formylamino)ethyl]-N-[3-(trimethoxysilyl)propyl]-formamide) (CAS RN:[112119-91-2]):

50 g of N-[2-(formylamino)ethyl]-N-[3-(trimethoxysilyl)propyl]amine and 50 g of ethyl formate are heated at a temperature of 78°C for 2h, excess of ethyl formate and ethanol is then evaporated under *vacuum* to furnish Silane-B.

### Preparative Example 3 (Binder 1)

35.8 g of Silane-A, prepared as described in Preparative Example 1, 35.5 g of 3-glycidyloxypropyl trimethoxysilane, 108.3 g of tetraethylsilicate and 1.75 g of formic acid are stirred. 478.9 g of water is then drop wise added during a period of 45 min while the temperature is maintained below 35°C. At the end of the addition, the temperature is raised to 50°C for 15 min and is then raised until distillation of the mixture of methanol and ethanol, the distillation is stopped when the temperature of the reactor reaches 100°C. For indication, a volume of c.a. 190 ml is collected in the distillation trap leading to a weight solids of Binder 1 of c.a. 16.2%.

### Preparative Example 4 (Binder 2)

47.8 g of Silane-B, prepared as described in Preparative Example 2, 42.3 g of 3-glycidyloxypropyl trimethoxysilane, 129.2 g of tetraethylsilicate and 2.0 g of formic acid are stirred. 2.2 g of conc. Sulphuric acid in 660.8 g of water is then drop wise added during a period of 45 min while the temperature is maintained below 35°C. At the end of the addition, the temperature is raised to 50°C for 1h 15 min and is then raised until distillation of the mixture of methanol and ethanol, the distillation is stopped when the temperature of the reactor reaches 100°C. For indication, a volume of c.a. 240 ml is collected in the distillation trap leading to a weight solids of Binder 2 of c.a. 16.9%.

### Preparative Example 5 (Binder 3)

40.06 g of Silane-B, prepared as described in Preparative Example 2, 35.45 g of 3-glycidyloxypropyl trimethoxysilane, 108.33 g of tetraethylsilicate are stirred. 1.86 g of conc. Sulphuric acid in 553.9 g of water is then drop wise added during a period of 45 min while the temperature is maintained below 38°C. At the end of the addition, the temperature is raised to 50°C for 20 min and is then raised until distillation of the mixture of methanol and ethanol, the distillation is stopped when the temperature of the reactor reaches 100°C. For indication, a volume of c.a. 200 ml is collected in the distillation trap leading to a weight solids of Binder 3 of c.a. 16.0%.

### Comparative Example 1 (Binder 4)

1071.4 g of 3-(triethoxysilyl)propyl]-amine, 295.9 g of methyl triethoxysilane are stirred. 2180 g of water is then drop wise added during a period of 1h 15 min while the temperature is maintained below 44°C. At the end of the addition, the temperature is raised to 60°C for 20 min and is then raised until distillation of the mixture of ethanol, the distillation is stopped when the temperature of the reactor reaches 100°C. For indication, a volume of c.a. 1600 ml is collected in the distillation trap leading to a weight solids of Binder 4 of c.a. 30.7%.

The following examples are of shop primer formulations:

**Table I**

| | Binder wt% | Fillers wt% | Zinc dust wt% |
|---|---|---|---|
| Example 1 | Binder 1 59.6 | Sikron M500 21 | 19.4 |
| Example 2 | Binder 2 59.6 | Sikron M500 20 .3 | 20.3 |
| Example 3 | Binder 3 50.8 | Sikron M500 26.5 | 22.7 |
| Comparative example 1 | Binder 4 37.0 | Zinc oxide/Bayferrox 130BM/Miox 7.6/7.6/22.6 | 25.2 |

Sikron M500 (RTM) is commercially available from Sibelco, Bayferrox 130 BM (RTM) is commercially available from Bayer, and Miox is a generic abbreviation for Micaceous Iron Oxide available from Kärtner.

The shop primers as disclosed in Table I were then overcoated and subjected to a 6 week immersion test. A visual inspection of the examples was then carried out, the results of which are shown in Table II:

**Table II**

| | Curing | 6 weeks immersion test after overcoating |
|---|---|---|
| Example 1 | Within 24 hours | Good |
| Example 2 | Within 24 hours | Good |
| Example 3 | Within 24 hours | Good |
| Comparative example 1 | Within 24 hours | Poor |

### General procedure for the preparation of preparative examples 6-16 (preparation of binders 5-15):

Silane A or Silane B (prepared as described above) 3-glycidyloxypropyl trimethoxysilane and tetraethylsilicate are stirred at room temperature. A water solution containing the acid(s) followed by the silica sol (Bindzil® CC30, Eka Chemicals AB) is added to the stirred silane mixture during 30 min while the temperature of the reactor is maintained below 32°C. At the end of the addition the temperature is raised over a period of c.a. 100 min until distillation of the released alcohols starts. At that time the temperature is stepwise raised to maintain a continuous distillation during typically 2 hours. The amounts of components added are displayed in **Table III,** which displays the relative weights of the components in grams.

**Table III**

| Prep Ex# | Binder # | Silane A* | Silane B** | Epoxy silane | tetraethyl silicate | HCOOH | H₂SO₄ | Silica sol | H₂O | Final solid contents (%) | Final pH |
|---|---|---|---|---|---|---|---|---|---|---|---|
| | | | | | | | | | | | |
| 6 | 5 | 51.98 | - | 51.98 | 103.9 | 2.1 | - | - | 609.8 | 16.9 | 2.71 |
| 7 | 6 | 53.9 | - | 53.9 | 107.8 | 2.2 | 2.2 | - | 646.2 | 17.1 | 1.66 |
| 8 | 7 | 51.9 | - | 51.9 | 103.9 | - | 2.1 | - | 609.8 | 17.4 | 1.57 |
| 9 | 8 | - | 150.2 | 132.9 | 406.2 | 6.59 | - | - | 2077.1 | 16.5 | 3.82 |
| 10 | 9 | 52.4 | - | 52.4 | 104.8 | 2.3 | - | 17.9 | 643.2 | 15.5 | 2.79 |
| 11 | 10 | 51.8 | - | 51.8 | 103.2 | 2.3 | 2.3 | 17.9 | 650.7 | 15.6 | 1.69 |
| 12 | 11 | 52.4 | - | 52.4 | 104.8 | - | 2.3 | 17.9 | 643.2 | 15.9 | 1.71 |
| 13 | 12 | 22.4 | - | 23.6 | 74.9 | - | 4.9 | 10.6 | 353.2 | 16.9 | 0.9 |
| 14 | 13 | - | 46.4 | 41.8 | 125.5 | 2.1 | - | 8.5 | 691.8 | 15.8 | 4.11 |
| 15 | 14 | - | 45.9 | 40.6 | 124.2 | 2.1 | 2.2 | 8.5 | 699.1 | 15.2 | 2.31 |
| 16 | 15 | - | 46.2 | 41.8 | 125.5 | - | 2.2 | 8.5 | 692.5 | 16.6 | 2.28 |

| | | | | | | | | | | | |
|---|---|---|---|---|---|---|---|---|---|---|---|
| * : Prepared as described in Preparative Example 1 ** : Prepared as described in Preparative Example 2 | | | | | | | | | | | |

Preparative examples 17 and 18 disclose the preparation of binders 16 and 17 in which the released alcohol is not removed.

### Preparative Example 17 (Binder 16):

25 g of Silane A, prepared as described in Preparative Example 1, 25 g of 3-glycidyloxypropyl trimethoxysilane and 75 g tetraethylsilicate are stirred at room temperature. 1.25 g of formic acid in 294.5 g of water is added to the stirred silane mixture during 30 min while the temperature of the reactor is maintained below 32°C.

### Preparative Example 18 (Binder 17):

25 g of Silane B, prepared as described in Preparative Example 2, 25 g of 3-glycidyloxypropyl trimethoxysilane and 75 g tetraethylsilicate are stirred at room temperature. 1.25 g of formic acid and in 294.5 g of water is added to the stirred silane mixture during 30 min while the temperature of the reactor is maintained below 32°C.

**Table IV** discloses the ingredients and relative amounts of paint examples 4 to 9 and comparative example 2.

**Table IV**

| Example | Binder#* | Binder weight* | Westmin D30E* | Talc de Luzenac 10MO* | Zinc dust Larvik* | Zinc oxide* |
|---|---|---|---|---|---|---|
| 4 | 16 | 51 | 26.5 | - | 22.5 | - |
| 5 | 17 | 51 | - | 26.5 | 22.5 | - |
| 6 | 2 | 51 | - | 26.5 | 22.5 | - |
| 7 | 14 | 51 | 26.5 | - | 22.5 | - |
| 8 | 12 | 51 | 26.5 | - | 22.5 | - |
| 9 | 12 | 51 | 21.5 | - | 22.5 | 5 |
| Comparative Example 2 | 4 | 51 | - | 26.5 | 22.5 | |

| | | | | | | |
|---|---|---|---|---|---|---|
| *Relative weights in grams | | | | | | |

The paint and film properties are disclosed in **Table V:**

**Table V**

| Example | Water double rubs after 24 hours | Pot life (hours)* | stable reactivity (months)** |
|---|---|---|---|
| 4 | > 200 | 4 | 1 |
| 5 | > 200 | 4 | 1 |
| 6 | > 200 | 2.5 | 2 |
| 7 | > 200 | 4.5 | 4 |
| 8 | > 200 | 2 | > 12 |
| 9 | > 200 | 2 | > 12 |
| Comp Ex 2 | > 200 | 1 | >24 |

| | | | |
|---|---|---|---|
| * : The pot life represents the time during which the viscosity remains low enough to allow application by the means of airless spraying. ** : The stable reactivity represents the interval during which the binders show no decrease of reactivity during curing. | | | |

The blistering was determined as follows:
Panels coated with formulations made according to the examples were over coated with a suitable marine epoxy topcoat like SigmaPrime available from Sigma. After 6 weeks of exposure in humidity cabinet (40°C, 100% RH), the blistering is identified according to ASTM D 714.

(10 = no blisters, 0 = biggest blisters, D = Dense, F = few).

All formulations based on Examples made according to the invention show no (or few) blistering. Comparative examples 1 and 2 show excessive blistering.

To see the differences of water sensitivity of the different binders based on formylated amine, the formulations are over coated with a more water sensitive top coat, a waterborne epoxy called: Aquacover 200 and 400 system (Comercially available from SigmaCoatings BV). The results are disclosed in Table VI.

**Table VI(overcoated with Aquacover 200/400).**

| Example | Blistering after 6 weeks hum.cab |
|---|---|
| 4 | 10 |
| 5 | 8D |
| 6 | 8D |
| 7 | 8D |
| 8 | 10 |
| 9 | 10 |
| Comp Ex 2 | 0D |
| SigmaWeld MC | 8F |

### Explanations of the results:

The difference in blistering between overcoated binders of the invention and comparative binders are shown in **Table VI.** The binders made in accordance with the invention show little or no blistering when overcoated, whereas the overcoated comparative example shows large, dense blistering.

## Claims

1. An aqueous binder composition for a paint comprising an oligomeric or polymeric substance formed from at least one monomer of the general formula I:
(R¹O-) ₘSi (-R^{X}-NR²R³) ₄₋ₘ **I**
where each R¹ group is independently selected from hydrogen, alkyl, alkenyl, alkynyl, aralkyl, aryl or - (C=O) R³³ group;
each R³³ group is independently selected from hydrogen or any alkyl, alkenyl, alkynyl, aralkyl or aryl group,
each R² group is independently selected from hydrogen, alkyl, alkenyl, alkynyl, aralkyl, aryl, R^{z} or -R^{Y}-NR^{V}R^{W} group;
each R³ group is independently selected from hydrogen, alkyl, alkenyl, alkynyl, aralkyl, aryl, R^{Z} or -R^{Y}-NR^{V}R^{W} group;
each R^{X} group is a bivalent organic bridging group,
and wherein each R^{Y} group is defined as for R^{X} above,
each R^{V} group is defined as for R² above,
each R^{W} group is defined as for R³ above,
wherein R² and/or R³ may independently be the group -R^{Y}-NR^{V}R^{W} and each R^{V} and/or R^{W} can then itself independently be -R^{Y}-NR^{V}R^{W}, the -R^{Y}-NR^{V}R^{W} group being repeated no more than six times between the silicon radical of general formula **I** and each terminal -R^{Y}-NR^{V}R^{W} group, wherein a terminal group is defined as R², R³, R^{V} or R^{W} being selected from hydrogen, alkyl, alkenyl, alkynyl, aryl, aralkyl or an R^{z} group;
R^{z} is - (C=O) R⁴ or - (C=O) - OR⁵,
where each R⁴ group is independently selected from hydrogen or any alkyl, alkenyl, alkynyl, aralkyl or aryl group,
each R⁵ group is independently selected from any alkyl, alkenyl, alkynyl, aralykyl or aryl group,
wherein when R² or R^{V} is R^{Z} and R² or R^{V} is - (C=O) R⁴, R² and R³ or R^{V} and R^{W} may together form a cyclic group such that the groups -NR²R³ or -NR^{V}R^{W} may each independently be represented by the formula **VI**: 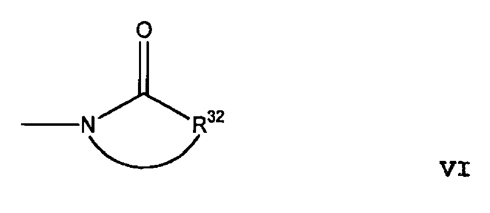 where R³² is defined as for R^{X} above, wherein R⁴ is a fragment of R³² and wherein R³ or R^{Y} are selected from alkylene, alkenylene, alkynylene, aralkylene or arylene and form the remainder of the R³² fragment,
m = 1 to 3.
wherein at least one nitrogen radical within the group NR²R³ is directly bonded to an R^{Z} group,
and wherein the monomer of general formula **I** comprises at least one N-formyl terminal group;
the oligomeric or polymeric substance further being formed from 0 to 99% w/w of at least one monomer having the general formula **II:**
(R⁸O-) _{q}Si (-R⁹) 4-q **II**
where each R⁸ is independently selected from hydrogen or any alkyl, alkenyl, alkynyl, aralkyl, aryl or -(C=O)R³⁴ group, where R³⁴ is defined as for R³³ above,
each R⁹ is independently selected from hydrogen or any alkyl, alkenyl, alkynyl, aralkyl or aryl group,
and q = 1 to 4.

2. An aqueous binder composition according to claim 1, wherein the aqueous binder composition is a paint binder composition.

3. An aqueous binder composition according to either of claim 1 or claim 2, wherein each R^{z} group is independently selected from -(C=O)H, - (C=O)CH₃, - (C=O) CH₂CH₃, - (C=O) CH₂CH₂CH₃, (C=O) CH (CH₃) CH₃, - (C=O) CH₂CH (CH₃) CH₃, - (C=O) C (CH₃)₃, - (C=O)-OCH₃, - (C=O)-OCH₂CH₃, - (C=O)-OCH (CH₃) CH₃, - (C=O) - OCH₂CH (CH₃) CH₃, - (C=O)-OC(CH₃)₃.

4. An aqueous binder composition according to any preceding claim, the oligomeric or polymeric substance is derived from at least one monomer of the general formula I wherein the at least one monomer of general formula I is at least 10% by weight of the total monomer used to produce the polymer.

5. An aqueous binder composition according to any preceding claim, wherein the oligomeric or polymeric substance is further, formed from 0.1 to 99% by weight of the total monomer used to produce the oligomeric or polymeric substance of at least one monomer of general formula **II.**

6. An aqueous binder composition according to any preceding claim, wherein the oligomeric or polymeric substance is present in the aqueous binder between 99% and 1% by dry weight of the binder composition.

7. A method of preparing an aqueous oligomeric or polymeric compound comprising the steps of:
i) contacting at least one monomer of the general formula **I:**
(R¹O-)ₘSi (-R^{X}-NR²R³)₄₋ₘ **I**
where each R¹ group is independently selected from hydrogen, alkyl, alkenyl, alkynyl, aralkyl, aryl or (C=O) R³³ group;
each R³³ group is independently selected from hydrogen or any alkyl, alkenyl, alkynyl, aralkyl or aryl group, each R² group is independently selected from hydrogen, alkyl, alkenyl, alkynyl, aralkyl, aryl, R^{Z} or -R^{Y}-NR^{V}R^{W} group;
each R³ group is independently selected from hydrogen, alkyl, alkenyl, alkynyl, aralkyl, aryl, R^{Z} or -R^{Y}-NR^{V}R^{W} group;
each R^{X} group is a bivalent organic bridging group,
and wherein each R^{Y} group is defined as for R^{X} above,
each R^{V} group is defined as for R² above,
each R^{W} group is defined as for R³ above,
wherein R² and/or R³ may independently be the group -R^{Y}-NR^{V}R^{W} and each R^{V} and/or R^{W} can then itself independently be -R^{Y}-NR^{V}R^{W}, the -R^{Y}-NR^{V}R^{W} group being repeated no more than six times between the silicon radical of general formula **I** and each terminal -R^{Y}-NR^{V}R^{W} group, wherein a terminal group is defined as R², R³, R^{V} or R^{W} being selected from hydrogen, alkyl, alkenyl, alkynyl, aryl, aralkyl or an R^{z} group;
R^{z} is -(C=O)R⁴ or - (C=O)-OR⁵,
where each R⁴ group is independently selected from hydrogen or any alkyl, alkenyl, alkynyl, aralkyl, or aryl group,
each R⁵ group is independently selected from any alkyl, alkenyl alkynyl, aralkyl or aryl group,
wherein when R² or R^{V} is R^{Z} and R² or R^{V} is -(C=O)R⁴ R² and R³ or R^{V} and R^{W} may together form a cyclic group such that the groups -NR²R³ or -NR^{V}R^{W} may each independently be represented by the formula **VI:** 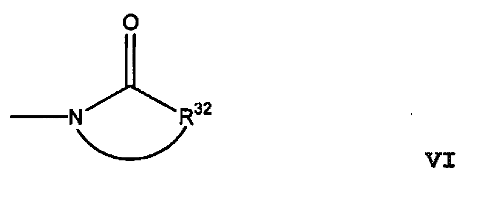 where R³² is defined as for R^{X} above, wherein R⁴ is a fragment of R³² and wherein R³ or R^{Y} are selected from alkylene, alkenylene, alkynylene, aralkylene or arylene and form the remainder of the R³² fragment,
m = 1 to 3,
wherein at least one nitrogen radical within the group - NR²R³ is directly bonded to an R^{z} group,
and wherein the monomer of general formula **I** comprises at least one N-formyl terminal group;
and, optionally, at least a second monomer having the general formula **II:**
(R⁸O-)_{q}Si (-R⁹)_{4-q} **II**
where each R⁸ is independently selected from hydrogen or any alkyl, alkenyl, alkynyl, aralkyl, aryl or -(C=O)R³⁴ group, where R³⁴ is defined as for R³³ above,
each R⁹ is independently selected from hydrogen or any alkyl, alkenyl, alkynyl, aralkyl or aryl group
and q = 1 to 4,
with an R¹O- removal agent and optionally an -R⁸O removal agent, the R¹O removal agent comprising water; and
ii) reacting the components in (i) to form an oligomer or polymer; and
iii) removing released alcohol, R³³COOH, R³⁴COOH and/or water.

8. A method according to claim 7, wherein the reaction takes place in the presence of a pH adjuster operable to adjust the pH of the reaction mixture to between 6 and 1.

9. A method according to claim 8, wherein the pH adjuster comprises the acid R³³COOH or R³⁴COOH generated during the reaction.

10. A paint composition comprising a binder composition as claimed in any of claims 1 to 6.

11. A paint composition according to claim 10, wherein the paint composition is a water based silicone decorative or protective paint composition.

12. A paint composition according to either of claim 10 or claim 11, wherein the paint composition is an anti-corrosive paint.

13. A paint composition according to any of claims 10 to 12, wherein the paint composition is a weldable shop primer.

14. A two component paint composition comprising:
i) a first component comprising a binder composition as claimed in any of claims 1 to 6; and
ii) a second component comprising at least one filler and/or zinc and/or zinc oxide and/or at least one conductive pigment.

15. A two component paint composition according to claim 14, wherein the at least one filler is present in the second component in an amount between 1 and 99% of the dry weight of the second component.

16. A two component paint composition according to either of claim 14 or 15, wherein zinc is present in the second component in an amount between 1 and 99% of the dry weight of the second component.

17. A two component paint composition according to any of claims 14 to 16, wherein zinc oxide is present in the second component in an amount between 1 and 99% of the dry weight of the second component.

18. A two component paint composition according to any of claims 14 to 17, wherein the at least one conductive pigment is present in the second component in an amount between 1 and 99% of the dry weight of the second component.

19. A two component paint composition according to any of claims 14 to 18, wherein the percentage w/w solids of the two component paint composition are between 70% and 10%.

20. An aqueous siloxane polymer composition derived from a monomer of general formula **I**:
(R¹O-) ₘSi (-R^{X}-NR²R³)₄₋ₘ **I**
where each R¹ group is independently selected from hydrogen, alkyl, alkenyl, alkynyl, aralkyl, aryl or - (C=O)R³³ group;
each R³³ group is independently selected from hydrogen or any alkyl, alkenyl, alkynyl, aralkyl or aryl group,
each R² group is independently selected from hydrogen, alkyl, alkenyl, alkynyl, aralkyl, aryl, R^{Z} or -R^{Y}-NR^{V}R^{W} group;
each R³ group is independently selected from hydrogen, alkyl, alkenyl, alkynyl, aralkyl, aryl, R^{Z} or -R^{Y}-NR^{V}R^{W} group;
each R^{X} group is a bivalent organic bridging group,
and wherein each R^{Y} group is defined as for R^{X} above,
each R^{V} group is defined as for R² above,
each R^{W} group is defined as for R³ above,
wherein R² and/or R³ may independently be the group -R^{Y}-NR^{V}K^{W} and each R^{V} and/or R^{W} can then itself independently be -R^{Y}-NR^{V}R^{W}, the -R^{Y}-NR^{V}R^{W} group being repeated no more than six times between the silicon radical of general formula I and each terminal -R^{Y}-NR^{V}R^{W} group, wherein a terminal group is defined as R², R³, R^{V} or R^{W} being selected from hydrogen, alkyl, alkenyl, alkynyl, aryl, aralkyl or an R^{Z} group;
R^{Z} is - (C=O)R⁴ or -(C=O)-OR⁵,
where each R⁴ group is independently selected from hydrogen or any alkyl, alkenyl, alkynyl, aralkyl, or aryl group,
each R⁵ group is independently selected from any alkyl, alkenyl, alkynyl, aralkyl or aryl group,
wherein when R² or R^{V} is R^{Z} and R² or R^{V} is -(C=O)R⁴, R² and R³ or R^{V} and R^{W} may together form a cyclic group such that the groups -NR²R³ or -NR^{V}R^{W} may each independently be represented by the formula **VI**: 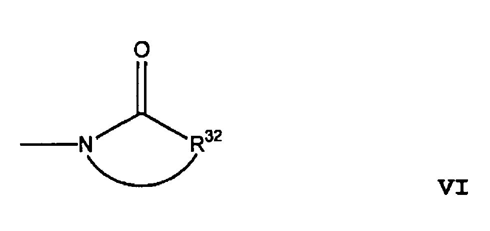 where R³² is defined as for R^{X} above, wherein R⁴ is a fragment of R³² and wherein R³ or R^{Y} are selected from alkylene, alkenylene, alkynylene, aralkylene or arylene and form the remainder of the R³² fragment,
m = 1 to 3,
wherein at least one nitrogen radical within the group - NR²R³ is directly bonded to an R^{Z} group;
wherein the monomer of general formula **I** comprises at least one N-formyl terminal group;
and wherein, the monomer of formula **I** is at least 5% by weight of the total monomer used to produce the polymer.

21. An aqueous siloxane polymer composition according to claim 20, wherein the siloxane polymer composition is further derived from a monomer having general formula **II:**
(R⁸O-)_{q}Si (-R⁹)_{4-q} **II**
where each R⁸ is independently selected from hydrogen or any alkyl, alkenyl, alkynyl, aralkyl, aryl or -(C=O)R³⁴ group,
where each R³⁴ group is independently selected from hydrogen or any alkyl, alkenyl, alkynyl, aralkyl or aryl group,
each R⁹ is independently selected from hydrogen or any alkyl, alkenyl, alkynyl, aralkyl or aryl group and q = 1 to 4,
wherein, the monomer of formula **II** is at least 1% by weight of the total monomer used to produce the polymer.

22. An aqueous binder composition comprising a siloxane polymer, P, comprising at least one side group or terminal group of general formula **III:**
-R^{X}-NR^{Z}R³ **III**
where R² is selected from hydrogen, alkyl, alkenyl, alkynyl, aralkyl, aryl, R^{Z} or -R^{Y}-NR^{V}R^{W} group;
R³ is selected from hydrogen, _alkyl, alkenyl, alkynyl, aralkyl, aryl, R^{Z} or -R^{Y}-NR^{V}R^{W} group;
R^{X} is a bivalent organic bridging group,
and wherein each R^{Y} group is defined as for R^{X} above,
each R^{V} group is defined as for R² above,
each R^{W} group is defined as for R³ above,
wherein R² and/or R³ may independently be the group -R^{y}-NR^{v}R^{w} and each R^{V} and/or R^{W} can then itself independently be -R^{Y}-NR^{V}R^{W}, the -R^{Y}-NR^{V}R^{W} group being repeated no more than six times between the silicon radical of the siloxane polymer to which the side group or terminal group of general formula III is attached and each terminal -R^{Y}-NR^{V}R^{W} group, wherein a terminal group is defined as R², R³, R^{V} or R^{W} being selected from hydrogen, alkyl, alkenyl, alkynyl, aryl, aralkyl or an R^{Z} group;
R^{Z} is -(C=O)R⁴ or - (C=O) - OR⁵,
where each R⁴ group is independently selected from hydrogen or any alkyl, alkenyl, alkynyl, aralkyl or aryl group,
each R⁵ group is independently selected from any alkyl, alkenyl, alkynyl, aralkyl or aryl group,
wherein when R² or R^{V} is R^{Z} and R² or R^{V} is - (C=O) R⁴, R² and R³ or R^{V} and R^{W} may together form a cyclic group such that the groups -NR²R³ or -NR^{V}R^{W} may each independently be represented by the formula **VI**: 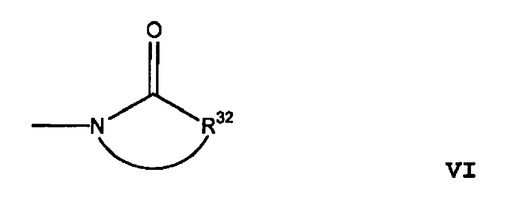 where R³² is defined as for R^{X} above, wherein R⁴ is a fragment of R³² and wherein R³ or R^{Y} are selected from alkylene, alkenylene, alkynylene, aralkylene or arylene and form the remainder of the R³² fragment,
wherein at least one nitrogen radical within the group -NR²R³ is directly bonded to an R^{Z} group;
and wherein the monomer of general formula **I** comprises at least one N-formyl terminal group.

23. A binder composition according to claim 22, wherein the siloxane polymer composition is formed from at least 10% (by weight of the total monomer used to produce the polymer) of a monomer of general formula **I.**

24. A binder composition according to either of claim 22 or claim 23, wherein the polymer P further comprises at least one side group or terminal group of general formula **IV**:
- R¹⁰ **IV**
where each R¹⁰ is independently selected from hydrogen or any alkyl, alkenyl, alkynyl, aralkyl or aryl group.

## Patentansprüche

1. Wäßrige Bindemittelzusammensetzung für ein Anstrichmittel, umfassend eine oligomere oder polymere Substanz, die aus mindestens einem Monomer der allgemeinen Formel I:
(R¹O-)ₘSi(-R^{X}-NR²R³)₄₋ₘ I
gebildet ist, wobei jede R¹-Gruppe unabhängig voneinander unter Wasserstoff, Alkyl, Alkenyl, Alkinyl, Aralkyl, Aryl oder einer -C(=O)R³³-Gruppe ausgewählt ist;
jede R³³-Gruppe unabhängig voneinander unter Wasserstoff oder einer Alkyl-, Alkenyl-, Alkinyl-, Aralkyl- oder Arylgruppe ausgewählt ist;
jede R²-Gruppe unabhängig voneinander unter Wasserstoff, Alkyl, Alkenyl, Alkinyl, Aralkyl, Aryl, R^{Z} oder einer -R^{Y}-NR^{V}R^{W}-Gruppe ausgewählt ist;
jede R³-Gruppe unabhängig voneinander unter Wasserstoff, Alkyl, Alkenyl, Alkinyl, Aralkyl, Aryl, R^{Z} oder einer -R^{Y}-NR^{V}R^{W}-Gruppe ausgewählt ist;
jede R^{X}-Gruppe für eine zweiwertige organische Brückengruppe steht
und jede R^{Y}-Gruppe wie oben für R^{X} definiert ist, jede R^{V}-Gruppe wie oben für R² definiert ist,
jede R^{W}-Gruppe wie oben für R³ definiert ist,
wobei R² und/oder R³ unabhängig voneinander für die Gruppe -R^{Y}-NR^{V}R^{W} stehen können und jedes R^{V} und/oder R^{W} dann selbst unabhängig voneinander für -R^{Y}-NR^{V}R^{W} stehen kann, wobei sich die -R^{Y}-NR^{V}R^{W}-Gruppe zwischen dem Siliciumrest der allgemeinen Formel I und jeder endständigen -R^{Y}-NR^{V}R^{W}-Gruppe nicht mehr als sechsmal wiederholt, wobei eine endständige Gruppe als R², R³, R^{V} oder R^{W}, das unter Wasserstoff, Alkyl, Alkenyl, Alkinyl, Aryl, Aralkyl oder einer R^{Z}-Gruppe ausgewählt ist, definiert ist;
R^{Z} für - (C=O) R⁴ oder - (C=O) - OR⁵ steht,
wobei jede R⁴-Gruppe unabhängig voneinander unter Wasserstoff oder einer Alkyl-, Alkenyl-, Alkinyl-, Aralkyl- oder Arylgruppe ausgewählt ist,
jede R⁵-Gruppe unabhängig voneinander unter einer Alkyl-, Alkenyl-, Alkinyl-, Aralkyl- oder Arylgruppe ausgewählt ist,
wobei dann, wenn R² oder R^{V} für R^{Z} steht und R² oder R^{V} für -C (=O) R⁴ steht, R² und R³ oder R^{V} und R^{W} zusammen eine solche cyclische Gruppe bilden können, daß die Gruppen -NR²R³ oder -NR^{V}RT^{W} unabhängig voneinander durch die Formel VI: 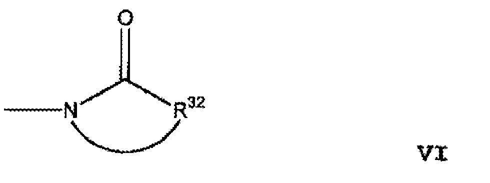 wiedergegeben werden können, wobei R³² wie oben für R^{X} definiert ist, R⁴ für ein Fragment von R³² steht und R³ oder R^{Y} unter Alkylen, Alkenylen, Alkinylen, Aralkylen oder Arylen ausgewählt sind und den Rest des R³²-Fragments bilden,
m = 1 bis 3,
wobei mindestens ein Stickstoffrest in der Gruppe -NR²R³ direkt an eine R^{Z}-Gruppe gebunden ist,
und wobei das Monomer der allgemeinen Formel I mindestens eine N-Formyl-Endgruppe umfaßt;
wobei die oligomere oder polymere Substanz ferner aus 0 bis 99% w/w mindestens eines Monomers der allgemeinen Formel II:
(R⁸O-)_{q}Si (-R⁹)_{4-q} II
gebildet ist, wobei jedes R⁸ unabhängig voneinander unter Wasserstoff oder einer Alkyl-, Alkenyl-, Alkinyl-, Aralkyl-, Aryl- oder -C(=O)R³⁴-Gruppe ausgewählt ist, wobei R³⁴ wie oben für R³³ definiert ist,
jedes R⁹ unabhängig voneinander unter Wasserstoff oder einer Alkyl-, Alkenyl-, Alkinyl-, Aralkyl- oder Arylgruppe ausgewählt ist
und q = 1 bis 4.

2. Wäßrige Bindemittelzusammensetzung nach Anspruch 1, bei der es sich um eine Bindemittelzusammensetzung für Anstrichmittel handelt.

3. Wäßrige Bindemittelzusammensetzung nach Anspruch 1 oder Anspruch 2, wobei jede R^{Z}-Gruppe unabhängig voneinander unter -(C=O)H, -(C=O)CH₃, -(C=O)CH₂CH₃, - (C=O) CH₂CH₂CH₃, - (C=O) CH (CH₃) CH₃, - (C=O) CH₂CH (CH₃) CH₃, - (C=O) C(CH₃)₃, - (C=O) -OCH₃, - (C=O) -OCH₂CH₃, - (C=O) -OCH (CH₃) CH₃, - (C=O) - OCH₂CH(CH₃)CH₃, -(C=O)-OC(CH₃)₃ ausgewählt ist.

4. Wäßrige Bindemittelzusammensetzung nach einem der vorhergehenden Ansprüche, wobei sich die oligomere oder polymere Substanz von mindestens einem Monomer der allgemeinen Formel I ableitet, wobei das mindestens eine Monomer der allgemeinen Formel I mindestens 10 Ges.-% des gesamten zur Herstellung des Polymers verwendeten Monomers ausmacht.

5. Wäßrige Bindemittelzusammensetzung nach einem der vorhergehenden Ansprüche, wobei die oligomere oder polymere Substanz ferner aus 0,1 bis 99 Ges.-%, bezogen auf das gesamte zur Herstellung der oligomeren oder polymeren Substanz verwendete Monomer, mindestens eines Monomers der allgemeinen Formel II gebildet ist.

6. Wäßrige Bindemittelzusammensetzung nach einem der vorhergehenden Ansprüche, wobei die oligomere oder polymere Substanz in dem wäßrigen Bindemittel in einer Menge zwischen 99 und 1%, bezogen auf das Trockengewicht der Bindemittelzusammensetzung, vorliegt.

7. Verfahren zur Herstellung einer wäßrigen oligomeren oder polymeren Verbindung, bei dem man:
i) mindestens ein Monomer der allgemeinen Formel I:
(R¹O-)ₘSi (-R^{X}-NR²R³)₄₋ₘ I
wobei jede R¹-Gruppe unabhängig voneinander unter Wasserstoff, Alkyl, Alkenyl, Alkinyl, Aralkyl, Aryl oder einer -C(=O)R³³-Gruppe ausgewählt ist;
jede R³³-Gruppe unabhängig voneinander unter Wasserstoff oder einer Alkyl-, Alkenyl-, Alkinyl-, Aralkyl- oder Arylgruppe ausgewählt ist;
jede R²-Gruppe unabhängig voneinander unter Wasserstoff, Alkyl, Alkenyl, Alkinyl, Aralkyl, Aryl, R^{Z} oder einer -R^{Y}-NR^{V}R^{W}-Gruppe ausgewählt ist;
jede R³-Gruppe unabhängig voneinander unter Wasserstoff, Alkyl, Alkenyl, Alkinyl, Aralkyl, Aryl, R^{Z} oder einer -R^{Y}-NR^{V}R^{W}-Gruppe ausgewählt ist;
jede R^{X}-Gruppe für eine zweiwertige organische Brückengruppe steht
und jede R^{Y}-Gruppe wie oben für R^{X} definiert ist, jede R^{V}-Gruppe wie oben für R² definiert ist,
jede R^{W}-Gruppe wie oben für R³ definiert ist,
wobei R² und/oder R³ unabhängig voneinander für die Gruppe -R^{Y}-NR^{V}R^{W} stehen können und jedes R^{V} und/oder R^{W} dann selbst unabhängig voneinander für -R^{Y}-NR^{V}R^{W} stehen kann, wobei sich die -R^{Y}-NR^{V}R^{W}-Gruppe zwischen dem Siliciumrest der allgemeinen Formel I und jeder endständigen -R^{Y}-NR^{V}R^{W}-Gruppe nicht mehr als sechsmal wiederholt, wobei eine endständige Gruppe als R², R³, R^{V} oder R^{W}, das unter Wasserstoff, Alkyl, Alkenyl, Alkinyl, Aryl, Aralkyl oder einer R^{Z}-Gruppe ausgewählt ist, definiert ist;
R^{Z} für - (C=O) R⁴ oder - (C=O) -OR⁵ steht,
wobei jede R⁴-Gruppe unabhängig voneinander unter Wasserstoff oder einer Alkyl-, Alkenyl-, Alkinyl-, Aralkyl- oder Arylgruppe ausgewählt ist,
jede R⁵-Gruppe unabhängig voneinander unter einer Alkyl-, Alkenyl-, Alkinyl-, Aralkyl- oder Arylgruppe ausgewählt ist,
wobei dann, wenn R² oder R^{V} für R^{Z} steht und R² oder R^{V} für -C (=O) R⁴ steht, R² und R³ oder R^{V} und R^{W} zusammen eine solche cyclische Gruppe bilden können, daß die Gruppen -NR²R³ oder -NR^{V}R^{W} unabhängig voneinander durch die Formel VI: 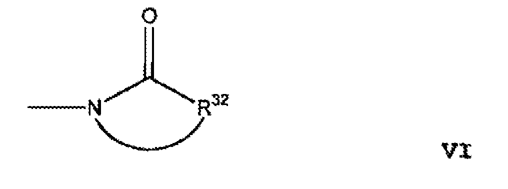 wiedergegeben werden können, wobei R³² wie oben für R^{X} definiert ist, R⁴ für ein Fragment von R³² steht und R³ oder R^{Y} unter Alkylen, Alkenylen, Alkinylen, Aralkylen oder Arylen ausgewählt sind und den Rest des R³²-Fragments bilden,
m = 1 bis 3,
wobei mindestens ein Stickstoffrest in der Gruppe -NR²R³ direkt an eine R^{Z}-Gruppe gebunden ist,
und wobei das Monomer der allgemeinen Formel I mindestens eine N-Formyl-Endgruppe umfaßt;
und gegebenenfalls mindestens ein zweites Monomer der allgemeinen Formel II:
(R⁸O-)_{q}Si (-R⁹)_{4-q} II
wobei jedes R⁸ unabhängig voneinander unter Wasserstoff oder einer Alkyl-, Alkenyl-, Alkinyl-, Aralkyl-, Aryl- oder -C(=O)R³⁴-Gruppe ausgewählt ist, wobei R³⁴ wie oben für R³³ definiert ist, jedes R⁹ unabhängig voneinander unter Wasserstoff oder einer Alkyl-, Alkenyl-, Alkinyl-, Aralkyl- oder Arylgruppe ausgewählt ist
und q = 1 bis 4,
mit einem Mittel zur Entfernung von R¹O- und gegebenenfalls einem Mittel zur Entfernung von -R⁸O, wobei das Mittel zur Entfernung von R¹O-Wasser umfaßt, in Berührung bringt und
ii) die Komponenten in (i) zu einem Oligomer oder Polymer umsetzt und
iii) freigesetzten Alkohol, freigesetztes R³³COOH, freigesetztes R³⁴COOH und/oder freigesetztes Wasser entfernt.

8. Verfahren nach Anspruch 7, bei dem die Umsetzung in Gegenwart eines Mittels zur Einstellung des pH-Werts, mit dem der pH-Wert der Reaktionsmischung auf einen Wert zwischen 6 und 1 eingestellt werden kann, erfolgt.

9. Verfahren nach Anspruch 8, bei dem das Mittel zur Einstellung des pH-Werts die während der Umsetzung gebildete Säure R³³COOH oder R³⁴COOH umfaßt.

10. Anstrichmittelzusammensetzung, umfassend eine Bindemittelzusammensetzung gemäß einem der Ansprüche 1 bis 6.

11. Anstrichmittelzusammensetzung nach Anspruch 10, bei der es sich um eine auf Wasser basierende dekorative oder schützende Silikon-Anstrichmittelzusammensetzung handelt.

12. Anstrichmittelzusammensetzung nach Anspruch 10 oder 11, bei der es sich um ein Antikorrosionsanstrichmittel handelt.

13. Anstrichmittelzusammensetzung nach einem der Ansprüche 10 bis 12, bei der es sich um eine schweißbare Fertigungsbeschichtung handelt.

14. Zweikomponentige Anstrichmittelzusammensetzung, umfassend:
i) eine erste Komponente, umfassend eine Bindemittelzusammensetzung gemäß einem der Ansprüche 1 bis 6; und
ii) eine zweite Komponente, umfassend mindestens einen Füllstoff und/oder Zink und/oder Zinkoxid und/oder mindestens ein leitfähiges Pigment.

15. Zweikomponentige Anstrichmittelzusammensetzung nach Anspruch 14, wobei der mindestens eine Füllstoff in der zweiten Komponente in einer Menge zwischen 1 und 99%, bezogen auf das Trockengewicht der zweiten Komponente, vorliegt.

16. Zweikomponentige Anstrichmittelzusammensetzung nach Anspruch 14 oder 15, wobei Zink in der zweiten Komponente in einer Menge zwischen 1 und 99%, bezogen auf das Trockengewicht der zweiten Komponente, vorliegt.

17. Zweikomponentige Anstrichmittelzusammensetzung nach einem der Ansprüche 14 bis 16, wobei Zinkoxid in der zweiten Komponente in einer Menge zwischen 1 und 99%, bezogen auf das Trockengewicht der zweiten Komponente, vorliegt.

18. Zweikomponentige Anstrichmittelzusammensetzung nach einem der Ansprüche 14 bis 17, wobei das mindestens eine leitfähige Pigment in der zweiten Komponente in einer Menge zwischen 1 und 99%, bezogen auf das Trockengewicht der zweiten Komponente, vorliegt.

19. Zweikomponentige Anstrichmittelzusammensetzung nach einem der Ansprüche 14 bis 18, wobei der gewichtsbezogene prozentuale Feststoffgehalt der zweikomponentigen Anstrichmittelzusammensetzung zwischen 70% und 10% liegt.

20. Wäßrige Siloxanpolymerzusammensetzung, abgeleitet von einem Monomer der allgemeinen Formel I:
(R¹O-)ₘ Si (-R^{X}-NR²R³)₄₋ₘ I
wobei jede R¹-Gruppe unabhängig voneinander unter Wasserstoff, Alkyl, Alkenyl, Alkinyl, Aralkyl, Aryl oder einer -C(=O)R³³-Gruppe ausgewählt ist;
jede R³³-Gruppe unabhängig voneinander unter Wasserstoff oder einer Alkyl-, Alkenyl-, Alkinyl-, Aralkyl- oder Arylgruppe ausgewählt ist;
jede R²-Gruppe unabhängig voneinander unter Wasserstoff, Alkyl, Alkenyl, Alkinyl, Aralkyl, Aryl, R^{Z} oder einer -R^{Y}-NR^{V}R^{W}-Gruppe ausgewählt ist;
jede R³-Gruppe unabhängig voneinander unter Wasserstoff, Alkyl, Alkenyl, Alkinyl, Aralkyl, Aryl, R^{Z} oder einer -R^{Y}-NR^{V}R^{W}-Gruppe ausgewählt ist;
jede R^{X}-Gruppe für eine zweiwertige organische Brückengruppe steht
und jede R^{Y}-Gruppe wie oben für R^{X} definiert ist,
jede R^{V}-Gruppe wie oben für R² definiert ist,
jede R^{W}-Gruppe wie oben für R³ definiert ist,
wobei R² und/oder R³ unabhängig voneinander für die Gruppe -R^{Y}-NR^{V}R^{W} stehen können und jedes R^{V} und/oder R^{W} dann selbst unabhängig voneinander für -R^{Y}-NR^{V}R^{W} stehen kann, wobei sich die -R^{Y}-NR^{V}R^{W}-Gruppe zwischen dem Siliciumrest der allgemeinen Formel I und jeder endständigen -R^{Y}-NR^{V}R^{W}-Gruppe nicht mehr als sechsmal wiederholt, wobei eine endständige Gruppe als R², R³, R^{V} oder R^{W}, das unter Wasserstoff, Alkyl, Alkenyl, Alkinyl, Aryl, Aralkyl oder einer R^{Z}-Gruppe ausgewählt ist, definiert ist;
R^{Z} für - (C=O) R⁴ oder - (C=O) -OR⁵ steht,
wobei jede R⁴-Gruppe unabhängig voneinander unter Wasserstoff oder einer Alkyl-, Alkenyl-, Alkinyl-, Aralkyl- oder Arylgruppe ausgewählt ist,
jede R⁵-Gruppe unabhängig voneinander unter einer Alkyl-, Alkenyl-, Alkinyl-, Aralkyl- oder Arylgruppe ausgewählt ist,
wobei dann, wenn R² oder R^{V} für R^{Z} steht und R² oder R^{V} für -C (=O) R⁴ steht, R² und R³ oder R^{V} und R^{W} zusammen eine solche cyclische Gruppe bilden können, daß die Gruppen -NR²R³ oder -NR^{V}R^{W} unabhängig voneinander durch die Formel VI: 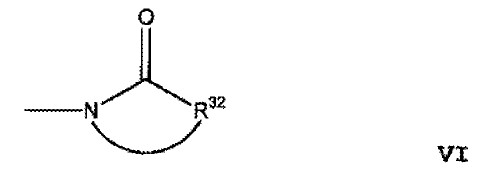 wiedergegeben werden können, wobei R³² wie oben für R^{X} definiert ist, R⁴ für ein Fragment von R³² steht und R³ oder R^{Y} unter Alkylen, Alkenylen, Alkinylen, Aralkylen oder Arylen ausgewählt sind und den Rest des R³²-Fragments bilden,
m = 1 bis 3,
wobei mindestens ein Stickstoffrest in der Gruppe
-NR²R³ direkt an eine R^{Z}-Gruppe gebunden ist,
wobei das Monomer der allgemeinen Formel I mindestens eine N-Formyl-Endgruppe umfaßt;
und wobei das Monomer der Formel I mindestens 5 Gew.-% des gesamten zur Herstellung des Polymers verwendeten Monomers ausmacht.

21. Wäßrige Siloxanpolymerzusammensetzung nach Anspruch 20, wobei die Siloxanpolymerzusammensetzung ferner von einem Monomer der allgemeinen Formel II:
(R⁸O-)_{q}Si (-R⁹)_{4-q} II
abgeleitet ist, wobei jedes R⁸ unabhängig voneinander unter Wasserstoff oder einer Alkyl-, Alkenyl-, Alkinyl-, Aralkyl-, Aryl- oder -C(=O)R³⁴-Gruppe ausgewählt ist, wobei jede R³⁴-Gruppe unabhängig voneinander unter Wasserstoff oder einer Alkyl-, Alkenyl-, Alkinyl-, Aralkyl- oder Arylgruppe ausgewählt ist,
jedes R⁹ unabhängig voneinander unter Wasserstoff oder einer Alkyl-, Alkenyl-, Alkinyl-, Aralkyl- oder Arylgruppe ausgewählt ist
und q = 1 bis 4,
wobei das Monomer der Formel II mindestens 1 Gew.-% des gesamten zur Herstellung des Polymers verwendeten Monomers ausmacht.

22. Wäßrige Bindemittelzusammensetzung, umfassend ein Siloxanpolymer P, umfassend mindestens eine Seitengruppe oder Endgruppe der allgemeinen Formel III:
-R^{X}-NR²R³ III
wobei R² unter Wasserstoff, Alkyl, Alkenyl, Alkinyl, Aralkyl, Aryl, R^{Z} oder einer -R^{Y}-NR^{V}R^{W}-Gruppe ausgewählt ist;
R³ unter Wasserstoff, Alkyl, Alkenyl, Alkinyl, Aralkyl, Aryl, R^{Z} oder einer -R^{Y}-NR^{V}R^{W}-Gruppe ausgewählt ist;
R^{X} für eine zweiwertige organische Brückengruppe steht
und jede R^{Y}-Gruppe wie oben für R^{X} definiert ist, jede R^{V}-Gruppe wie oben für R² definiert ist,
jede R^{W}-Gruppe wie oben für R³ definiert ist,
wobei R² und/oder R³ unabhängig voneinander für die Gruppe -R^{Y}-NR^{V}R^{W} stehen können und jedes R^{V} und/oder R^{W} dann selbst unabhängig voneinander für -R^{Y}-NR^{V}R^{W} stehen kann, wobei sich die -R^{Y}-NR^{V}R^{W}-Gruppe zwischen dem Siliciumrest des Siloxanpolymers, an das die Seitengruppe oder die Endgruppe der allgemeinen Formel III gebunden ist, und jeder endständigen -R^{Y}-NR^{V}R^{W}-Gruppe nicht mehr als sechsmal wiederholt, wobei eine endständige Gruppe als R², R³, R^{V} oder R^{W}, das unter Wasserstoff, Alkyl, Alkenyl, Alkinyl, Aryl, Aralkyl oder einer R^{Z}-Gruppe ausgewählt ist, definiert ist;
R^{Z} für - (C=O) R⁴ oder - (C=O) -OR⁵ steht,
wobei jede R⁴-Gruppe unabhängig voneinander unter Wasserstoff oder einer Alkyl-, Alkenyl-, Alkinyl-, Aralkyl- oder Arylgruppe ausgewählt ist,
jede R⁵-Gruppe unabhängig voneinander unter einer Alkyl-, Alkenyl-, Alkinyl-, Aralkyl- oder Arylgruppe ausgewählt ist,
wobei dann, wenn R² oder R^{V} für R^{Z} steht und R² oder R^{V} für -C (=O) R⁴ steht, R² und R³ oder R^{V} und R^{W} zusammen eine solche cyclische Gruppe bilden können, daß die Gruppen -NR²R³ oder -NR^{V}R^{W} unabhängig voneinander durch die Formel VI: 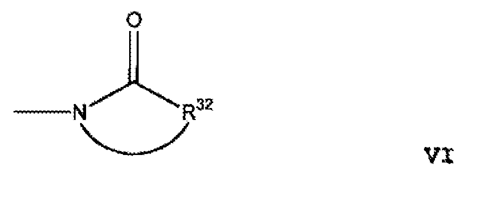 wiedergegeben werden können, wobei R³² wie oben für R^{X} definiert ist, R⁴ für ein Fragment von R³² steht und R³ oder R^{Y} unter Alkylen, Alkenylen, Alkinylen, Aralkylen oder Arylen ausgewählt sind und den Rest des R³²-Fragments bilden,
wobei mindestens ein Stickstoffrest in der Gruppe -NR²R³ direkt an eine R^{Z}-Gruppe gebunden ist; und wobei das Monomer der allgemeinen Formel I mindestens eine N-Formyl-Endgruppe umfaßt.

23. Bindemittelzusammensetzung nach Anspruch 22, wobei die Siloxanpolymerzusammensetzung aus mindestens 10% (bezogen auf das Gewicht des gesamten zur Herstellung des Polymers verwendeten Monomers) eines Monomers der allgemeinen Formel I gebildet ist.

24. Bindemittelzusammensetzung nach Anspruch 22 oder Anspruch 23, wobei das Polymer P ferner mindestens eine Seitengruppe oder Endgruppe der allgemeinen Formel IV:
-R¹⁰ IV
umfaßt, wobei jedes R¹⁰ unabhängig voneinander unter Wasserstoff oder einer Alkyl-, Alkenyl-, Alkinyl-, Aralkyl- oder Arylgruppe ausgewählt ist.

## Revendications

1. Composition de liant aqueux pour une peinture, comprenant une substance oligomère ou polymère formée à partir d'au moins un monomère de formule générale I :
(R¹O-)ₘSi (-R^{X}-NR²R³)₄₋ₘ I
dans laquelle chaque groupe R¹ est choisi indépendamment parmi un groupe hydrogène, alkyle, alcényle, alcynyle, aralkyle, aryle ou -(C=O)R³³ ;
chaque groupe R³³ étant choisi indépendamment parmi l'hydrogène ou tout groupe alkyle, alcényle, alcynyle, aralkyle ou aryle,
chaque groupe R² est choisi indépendamment parmi un groupe hydrogène, alkyle, alcényle, alcynyle, aralkyle, aryle, R^{Z} ou -R^{Y}-NR^{V}R^{W} ;
chaque groupe R³ est choisi indépendamment parmi un groupe hydrogène, alkyle, alcényle, alcynyle, aralkyle, aryle, R^{Z} ou -R^{Y}-NR^{V}R^{W} ;
chaque groupe R^{X} est un groupe de pontage organique bivalent,
et chaque groupe R^{Y} étant tel que défini pour R^{X} ci-dessus,
chaque groupe R^{V} étant tel que défini pour R² ci-dessus, chaque groupe R^{W} étant tel que défini pour R³ ci-dessus, R² et/ou R³ pouvant être indépendamment le groupe -R^{Y}-NR^{V}R^{W} et chaque R^{V} et/ou R^{W} pouvant alors lui-même être indépendamment -R^{Y}-NR^{V}R^{W}, le groupe -R^{Y}-NR^{V}R^{W} n'étant pas répété plus de six fois entre le radical silicium de la formule générale I et chaque groupe -R^{Y}-NR^{V}R^{W} terminal, un groupe terminal étant défini comme un R², R³, R^{V} ou R^{W} choisi parmi un groupe hydrogène, alkyle, alcényle, alcynyle, aryle, aralkyle ou R^{Z} ;
R^{Z} étant - (C=O) R⁴ ou -(C=O)-OR⁵,
chaque groupe R⁴ étant choisi indépendamment parmi l'hydrogène ou tout groupe alkyle, alcényle, alcynyle, aralkyle ou aryle, chaque groupe R⁵ étant choisi indépendamment parmi tout groupe alkyle, alcényle, alcynyle, aralkyle ou aryle, lorsque R² ou R^{V} est R^{Z} et lorsque R² ou R^{V} est - (C=O) R⁴, R² et R³ ou R^{V} et R^{W} pouvant former ensemble un groupe cyclique de sorte que les groupes -NR²R³ ou -NR^{V}R^{W} puissent chacun indépendamment être représentés par la formule VI : 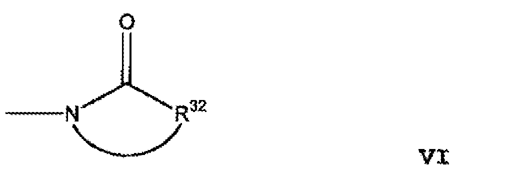 dans laquelle R³² est tel que défini pour R^{X} ci-dessus, R⁴ étant un fragment de R³² et R³ ou R^{Y} étant choisis parmi alkylène, alcénylène, alcynylène, aralkylène ou arylène et formant le reste du fragment R³²,
m = 1 à 3,
au moins un radical azote dans le groupe -NR²R³ étant relié directement à un groupe R^{Z},
et le monomère de formule générale I comprenant au moins un groupe terminal N-formyle ;
la substance oligomère ou polymère étant également formée à partir de 0 à 99 % p/p d'au moins un monomère de formule générale II :
(R⁸O-)_{q}Si (-R⁹)_{4-q} II
dans laquelle chaque R⁸ est choisi indépendamment parmi l'hydrogène ou tout groupe alkyle, alcényle, alcynyle, aralkyle, aryle ou - (C=O) R³⁴, R³⁴ étant tel que défini pour R³³ ci-dessus,
chaque R⁹ est choisi indépendamment parmi l'hydrogène ou tout groupe alkyle, alcényle, alcynyle, aralkyle ou aryle,
et q = 1 à 4.

2. Composition de liant aqueux selon la revendication 1, dans laquelle la composition de liant aqueux est une composition de liant pour peinture.

3. Composition de liant aqueux selon l'une quelconque des revendications 1 ou 2, dans laquelle chaque groupe R^{Z} est choisi indépendamment parmi -(C=O)H, - (C=O) CH₃, - (C=O) CH₂CH₃, - (C=O) CH₂CH₂CH₃, - (C=O) CH (CH₃) CH₃, -(C=O)CH₂CH(CH₃)CH₃, -(C=O)C(CH₃)₃, -(C=O)OCH₃, -(C=O)-OCH₂CH₃, - (C=O) -OCH (CH₃) CH₃, - (C=O) -OCH₂CH (CH₃) CH₃,-(C=O)-OC(CH₃)₃.

4. Composition de liant aqueux selon l'une quelconque des revendications précédentes, la substance oligomère ou polymère étant dérivée d'au moins un monomère de formule générale I, dans laquelle le ou les monomères de formule générale I représentent au moins 10 % en poids du monomère total utilisé pour fabriquer le polymère.

5. Composition de liant aqueux selon l'une quelconque des revendications précédentes, dans laquelle la substance oligomère ou polymère est également formée à partir de 0,1 à 99 % en poids du monomère total utilisé pour fabriquer la substance oligomère ou polymère d'au moins un monomère de formule générale II.

6. Composition de liant aqueux selon l'une quelconque des revendications précédentes, dans laquelle la substance oligomère ou polymère est présente dans le liant aqueux entre 99 % et 1 % en poids sec de la composition de liant.

7. Procédé de préparation d'un composé oligomère ou polymère aqueux comprenant les étapes suivantes :
i) la mise en contact d'au moins un monomère de formule générale I :
(R¹O-)ₘSi (-R^{X}-NR²R³)₄₋ₘ I
dans laquelle chaque groupe R¹ est choisi indépendamment parmi un groupe hydrogène, alkyle, alcényle, alcynyle, aralkyle, aryle ou (C=O)R³³ ;
chaque groupe R³³ étant choisi indépendamment parmi l'hydrogène ou tout groupe alkyle, alcényle, alcynyle, aralkyle ou aryle,
chaque groupe R² est choisi indépendamment parmi un groupe hydrogène, alkyle, alcényle, alcynyle, aralkyle, aryle, R^{Z} ou -R^{Y}-NR^{V}R^{W} ;
chaque groupe R³ est choisi indépendamment parmi un groupe hydrogène, alkyle, alcényle, alcynyle, aralkyle, aryle, R^{Z} ou -R^{Y}-NR^{V}R^{W} ;
chaque groupe R^{X} est un groupe de pontage organique bivalent,
et chaque groupe R^{Y} étant tel que défini pour R^{X} ci-dessus,
chaque groupe R^{V} étant tel que défini pour R² ci-dessus, chaque groupe R^{W} étant tel que défini pour R³ ci-dessus, R² et/ou R³ pouvant être indépendamment le groupe -R^{Y}-NR^{V}R^{W} et chaque R^{V} et/ou R^{W} pouvant alors lui-même être indépendamment -R^{Y}-NR^{V}R^{W}, le groupe -R^{Y}-NR^{V}R^{W} n'étant pas répété plus de six fois entre le radical silicium de la formule générale I et chaque groupe -R^{Y}-NR^{V}R^{W} terminal, un groupe terminal étant défini comme un R², R³, R^{V} ou R^{W} choisi parmi un groupe hydrogène, alkyle, alcényle, alcynyle, aryle, aralkyle ou R^{Z};
R^{Z} étant - (C=O)R⁴ ou -(C=O)-OR⁵,
chaque groupe R⁴ étant choisi indépendamment parmi l'hydrogène ou tout groupe alkyle, alcényle, alcynyle, aralkyle ou aryle,
chaque groupe R⁵ étant choisi indépendamment parmi tout groupe alkyle, alcényle, alcynyle, aralkyle ou aryle, lorsque R² ou R^{V} est R^{Z} et lorsque R² ou R^{V} est - (C=O) R⁴, R² et R³ ou R^{V} et R^{W} pouvant former ensemble un groupe cyclique de sorte que les groupes -NR²R³ ou -NR^{V}R^{W} puissent chacun indépendamment être représentés par la formule VI : 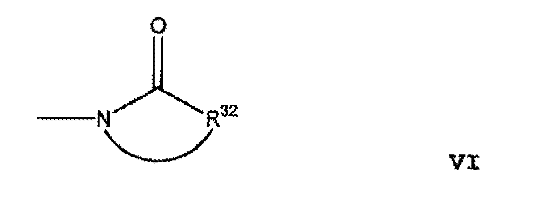 dans laquelle R³² est tel que défini pour R^{X} ci-dessus, R⁴ étant un fragment de R³² et R³ ou R^{Y} étant choisis parmi alkylène, alcénylène, alcynylène, aralkylène ou arylène et formant le reste du fragment R³²,
m = 1 à 3,
au moins un radical azote dans le groupe -NR²R³ étant relié directement à un groupe R^{Z},
et le monomère de formule générale I comprenant au moins un groupe terminal N-formyle ;
et, éventuellement, au moins un second monomère de formule générale II :
(R⁸O-)qSi (-R⁹)_{4-q} II
dans laquelle chaque R⁸ est choisi indépendamment parmi l'hydrogène ou tout groupe alkyle, alcényle, alcynyle, aralkyle, aryle ou - (C=O) R³⁴, R³⁴ étant tel que défini pour R³³ ci-dessus,
chaque R⁹ est choisi indépendamment parmi l'hydrogène ou tout groupe alkyle, alcényle, alcynyle, aralkyle ou aryle,
et q = 1 à 4,
avec un agent d'élimination de R¹O- et éventuellement un agent d'élimination de -R⁸O, l'agent d'élimination de R¹O- comprenant de l'eau ; et
ii) la mise en réaction des composants de (i) pour former un oligomère ou un polymère ; et
iii) l'élimination de l'alcool, R³³COOH, R³⁴COOH et/ou l'eau libérés.

8. Procédé selon la revendication 7, dans lequel la réaction a lieu en présence d'un ajusteur de pH utilisable pour ajuster le pH du mélange réactionnel entre 6 et 1.

9. Procédé selon la revendication 8, dans lequel l'ajusteur de pH comprend l'acide R³³COOH ou R³⁴COOH généré pendant la réaction.

10. Composition de peinture comprenant une composition de liant selon l'une quelconque des revendications 1 à 6.

11. Composition de peinture selon la revendication 10, dans laquelle la composition de peinture est une composition de peinture protectrice ou décorative de silicone à base d'eau.

12. Composition de peinture selon l'une quelconque des revendications 10 ou 11, dans laquelle la composition de peinture est une peinture anticorrosion.

13. Composition de peinture selon l'une quelconque des revendications 10 à 12, dans laquelle la composition de peinture est une peinture primaire d'atelier soudable.

14. Composition de peinture bicomposante, comprenant : i) un premier composant qui comprend une composition de liant selon l'une quelconque des revendications 1 à 6 ; et ii) un second composant qui comprend au moins une charge et/ou du zinc et/ou de l'oxyde de zinc et/ou au moins un pigment conducteur.

15. Composition de peinture bicomposante selon la revendication 14, dans laquelle la ou les charges sont présentes dans le second composant en une quantité comprise entre 1 et 99 % du poids sec du second composant.

16. Composition de peinture bicomposante selon l'une quelconque des revendications 14 ou 15, dans laquelle du zinc est présent dans le second composant en une quantité comprise entre 1 et 99 % du poids sec du second composant.

17. Composition de peinture bicomposante selon l'une quelconque des revendications 14 à 16, dans laquelle de l'oxyde de zinc est présent dans le second composant en une quantité comprise entre 1 et 99 % du poids sec du second composant.

18. Composition de peinture bicomposante selon l'une quelconque des revendications 14 à 17, dans laquelle le ou les pigments conducteurs sont présents dans le second composant en une quantité comprise entre 1 et 99 % du poids sec du second composant.

19. Composition de peinture bicomposante selon l'une quelconque des revendications 14 à 18, dans laquelle les pourcentages de solides p/p de la composition de peinture bicomposante sont compris entre 70 % et 10 %.

20. Composition de polymère de siloxane aqueux dérivée d'un monomère de formule générale I :
(R¹O-)ₘSi (-R^{X}-NR²R³)₄₋ₘ I
dans laquelle chaque groupe R¹ est choisi indépendamment parmi un groupe hydrogène, alkyle, alcényle, alcynyle, aralkyle, aryle ou (C=O)R³³ ;
chaque groupe R³³ étant choisi indépendamment parmi l'hydrogène ou tout groupe alkyle, alcényle, alcynyle, aralkyle ou aryle,
chaque groupe R² est choisi indépendamment parmi un groupe hydrogène, alkyle, alcényle, alcynyle, aralkyle, aryle, R^{Z} ou -R^{Y}-NR^{V}R^{W} ;
chaque groupe R³ est choisi indépendamment parmi un groupe hydrogène, alkyle, alcényle, alcynyle, aralkyle, aryle, R^{Z} ou -R^{Y}-NR^{V}R^{W} ;
chaque groupe R^{X} est un groupe de pontage organique bivalent,
et chaque groupe R^{Y} étant tel que défini pour R^{X} ci-dessus,
chaque groupe R^{V} étant tel que défini pour R² ci-dessus, chaque groupe R^{W} étant tel que défini pour R³ ci-dessus, R² et/ou R³ pouvant être indépendamment le groupe -R^{Y}-NR^{V}R^{W} et chaque R^{V} et/ou R^{W} pouvant alors lui-même être indépendamment -R^{Y}-NR^{V}R^{W}, le groupe -R^{Y}-NR^{V}R^{W} n'étant pas répété plus de six fois entre le radical silicium de la formule générale I et chaque groupe -R^{Y}-NR^{V}R^{W} terminal, un groupe terminal étant défini comme un R², R³, R^{V} ou R^{W} choisi parmi un groupe hydrogène, alkyle, alcényle, alcynyle, aryle, aralkyle ou R^{Z} ;
R^{Z} est -(C=O)R⁴ ou -(C=O)-OR⁵,
chaque groupe R⁴ étant choisi indépendamment parmi l'hydrogène ou tout groupe alkyle, alcényle, alcynyle, aralkyle ou aryle,
chaque groupe R⁵ étant choisi indépendamment parmi tout groupe alkyle, alcényle, alcynyle, aralkyle ou aryle, lorsque R² ou R^{V} est R^{Z} et lorsque R² ou R^{V} est - (C=O) R⁴, R² et R³ ou R^{V} et R^{W} pouvant former ensemble un groupe cyclique de sorte que les groupes -NR²R³ ou -NR^{V}R^{W} puissent chacun indépendamment être représentés par la formule VI : 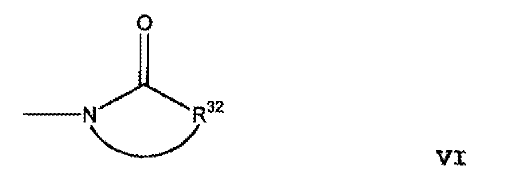 dans laquelle R³² est tel que défini pour R^{X} ci-dessus, R⁴ étant un fragment de R³² et R³ ou R^{Y} étant choisis parmi alkylène, alcénylène, alcynylène, aralkylène ou arylène et formant le reste du fragment R³²,
m = 1 à 3,
au moins un radical azote dans le groupe -NR²R³ étant relié directement à un groupe R^{Z} ;
le monomère de formule générale I comprenant au moins un groupe terminal N-formyle ;
et
le monomère de formule I représentant au moins 5 % en poids du monomère total utilisé pour fabriquer le polymère.

21. Composition de polymère de siloxane aqueux selon la revendication 20, dans laquelle la composition de polymère de siloxane est également dérivée d'un monomère de formule générale II :
(R⁸O-)_{q}Si (-R⁹)_{4-q} II
dans laquelle chaque R⁸ est choisi indépendamment parmi l'hydrogène ou tout groupe alkyle, alcényle, alcynyle, aralkyle, aryle ou -(C=O)R³⁴,
chaque groupe R³⁴ étant choisi indépendamment parmi l'hydrogène ou tout groupe alkyle, alcényle, alcynyle, aralkyle ou aryle,
chaque R⁹ est choisi indépendamment parmi l'hydrogène ou tout groupe alkyle, alcényle, alcynyle, aralkyle ou aryle,
et q = 1 à 4,
le monomère de formule II représentant au moins 1 % en poids du monomère total utilisé pour fabriquer le polymère.

22. Composition de liant aqueux comprenant un polymère de siloxane, P, qui comprend au moins un groupe latéral ou un groupe terminal de formule générale III :
-R^{X}-NR²R³ III
dans laquelle R² est choisi parmi un groupe hydrogène, alkyle, alcényle, alcynyle, aralkyle, aryle, R^{Z} ou -R^{Y}-NR^{V}R^{W} ;
R³ est choisi parmi un groupe hydrogène, alkyle, alcényle, alcynyle, aralkyle, aryle, R^{Z} ou -R^{Y}-NR^{V}R^{W} ;
R^{X} est un groupe de pontage organique bivalent,
et chaque groupe R^{Y} étant tel que défini pour R^{X} ci-dessus,
chaque groupe R^{V} étant tel que défini pour R² ci-dessus, chaque groupe R^{W} étant tel que défini pour R³ ci-dessus, R² et/ou R³ pouvant être indépendamment le groupe -R^{Y}-NR^{V}R^{W} et chaque R^{V} et/ou R^{W} pouvant alors lui-même être indépendamment -R^{Y}-NR^{V}R^{W}, le groupe -R^{Y}-NR^{V}R^{W} n'étant pas répété plus de six fois entre le radical silicium du polymère de siloxane auquel le groupe latéral ou le groupe terminal de formule générale III est attaché et chaque groupe -R^{Y}-NR^{V}R^{W} terminal, un groupe terminal étant défini comme un R², R³, R^{V} ou R^{W} choisi parmi un groupe hydrogène, alkyle, alcényle, alcynyle, aryle, aralkyle ou R^{Z} ;
R^{Z} étant - (C=O) R⁴ ou -(C=O)-OR⁵,
chaque groupe R⁴ étant choisi indépendamment parmi l'hydrogène ou tout groupe alkyle, alcényle, alcynyle, aralkyle ou aryle,
chaque groupe R⁵ étant choisi indépendamment parmi tout groupe alkyle, alcényle, alcynyle, aralkyle ou aryle, lorsque R² ou R^{V} est R^{Z} et lorsque R² ou R^{V} est - (C=O) R⁴, R² et R³ ou R^{V} et R^{W} pouvant former ensemble un groupe cyclique de sorte que les groupes -NR²R³ ou -NR^{V}R^{W} puissent chacun indépendamment être représentés par la formule VI : 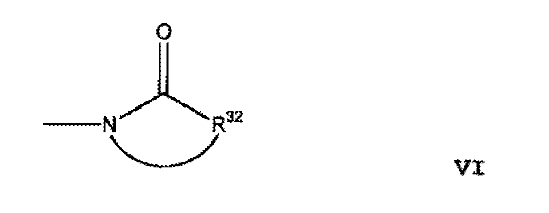 dans laquelle R³² est tel que défini pour R^{X} ci-dessus, R⁴ étant un fragment de R³² et R³ ou R^{Y} étant choisis parmi alkylène, alcénylène, alcynylène, aralkylène ou arylène et formant le reste du fragment R³²,
au moins un radical azote dans le groupe -NR²R³ étant relié directement à un groupe R^{Z},
et le monomère de formule générale I comprenant au moins un groupe terminal N-formyle.

23. Composition de liant selon la revendication 22, dans laquelle la composition de polymère de siloxane est formée à partir d'au moins 10 % (en poids du monomère total utilisé pour fabriquer le polymère) d'un monomère de formule générale I.

24. Composition de liant selon l'une quelconque des revendications 22 ou 23, dans laquelle le polymère P comprend également au moins un groupe latéral ou un groupe terminal de formule générale IV :
-R¹⁰ IV
chaque R¹⁰ étant choisi indépendamment parmi l'hydrogène ou tout groupe alkyle, alcényle, alcynyle, aralkyle ou aryle.
